# EUROPEAN PATENT APPLICATION

(11) **EP 1 990 980 A1**
(43) Date of publication of application: **12.11.2008**
(21) Application number: 06715117.5
(22) Date of filing: 02.03.2006
(51) Int. Cl.: H04M 1/02, H01Q 9/04

(54) **MOBILE TERMINAL**

(71) Applicant: MATSUSHITA ELECTRIC INDUSTRIAL CO., LTD., Osaka 571-8501 (JP)
(72) Inventor: SATOU, Noriyoshi Matsushita Electric Industrial Co., Ltd., 2-1-61, Shiromi, Chuo-ku Osaka 540-6207 (JP); SATO, Kenichi Matsushita Electric Industrial Co., Ltd., 2-1-61, Shiromi, Chuo-ku Osaka 540-6207 (JP); TAKAHASHI, Akira Matsushita Electric Industrial Co., Ltd., 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/304008
(87) International publication number: WO 2007/099638

(57) **Abstract**

The present invention provides a sliding type portable terminal having a slide portion from which the head portions and the leading ends of screws are not exposed when the portable terminal is in an opened state.

A first casing 2 and a second casing 3 are connected to each other by a slide portion 4 so as to be slidable. The first casing 2 has an opening portion 40 in an opposed surface which faces the second casing 3. The second casing 3 has a stationary portion 41 that is provided in an opposed surface thereof facing the first casing 2. The slide portion 4 includes a base portion 32, a guide-rail portion 31, and urging portions 33, and 34. The base portion 32 is fixed to the stationary portion 41 and is slidably guided by the guide-rail portion 31. The guide-rail portion 31 has a guide portion 46 which guides the base portion 32 so that the base portion 32 is slidable and which protrudes toward the second casing 3, and has also an extension portion 52 formed by extending the guide-rail portion 31 so that the guide-rail portion 31 projects outwardly from the guide portion 46. The urging portions 33 and 34 are-provided so as to urge the base portion 32 to a sliding end of the guide portion 46. When the slide portion 4 is attached in the opening portion 40 so as to extend from an inner surface side of the first casing 2 to an outer surface side thereof, the extension portion 52 is made to abut against the periphery of the opening portion 40, so as to allow the base portion 32 and the urging portions 33 and 34 to pass therethrough, and as to cause the guide-rail portion 31 to prevent the opening portion 40 from passing therethrough.

## Description

### <Technical Field>

The present invention relates to a sliding type portable terminal, such as a portable telephone, a PDA, a camera, a notebook type personal computer, including a base portion slidably provided on a guide-rail portion and including also an urging member for urging the base portion towards a sliding end of the guide-rail portion.

### <Background Art>

In recent years, a great number of portable telephones have been developer and used. The portable telephones of various types have been developer, which include folding type ones that are openable/closable via a rotating hinge, and sliding type ones that are openable/closable via a sliding device in addition to straight type ones shaped like a simple stick.

The sliding type portable telephone has a sliding mechanism that performs relative sliding of first and second casings in a state that the first and second casings are stacked one on the top of the other. The sliding mechanism is constituted by a sliding case attached to one of the first and second casings, a slider that is slidably attached to the sliding case and which is attached to the other of the first and second casings, and an elastic means which is provided between the slider and the sliding case and which slide-urges the slider from a predetermined sliding position in a closing direction and in an opening direction.

Moreover, plural female screw portions are provided in this slide case. The sliding mechanism is attached to the first casing by male screw portions attached to the first casing (see, for example, Patent Document 1).

Furthermore, the sliding type portable telephone having the sliding mechanism configured to perform relative sliding of the first and second casings in a state, in which the first and second casings are stacked one on the top of the other, is such that an antenna is placed at the bottom of the second casing (see, for example, Patent Document 2).

Additionally, the portable terminal of such a type often enhances designability by covering the head portion and the leading end of each screw with dedicated members, respectively, so as to enhance fashionability (see, for example, Patent Document 3).
Patent Document 1: JP-A-2005-210649
Patent Document 2: JP-A-2005-244679
Patent Document 3: JP-A-2002-305569

### <Disclosure of the Invention>

### <Problems that the Invention is to Solve>

Such a sliding mechanism requires a desired urging force to prevent the sliding type portable telephone from unexpectedly opening when a user holds this portable telephone in his hand, and to prevent the sliding type portable telephone from easily closing when a user handles an e-mail or makes a call over this portable telephone. Thus, an elastic means is installed therein. The sliding mechanism having this elastic means is attached to the first casing using the screws, as described above.

In a case where such a sliding type portable telephone is put into an opened state, the female screw portions attached to the first casing are exposed. The head part or the leading end of each male screw portion is exposed to an associated one of the female screw portions.

Accordingly, in a case where the sliding mechanism disclosed in Patent Document 1 is used in the sliding type portable terminal, it is necessary to hide each female screw portion by adding an associated blindfold cover (dedicated member) disclosed in Patent Document 3 to the sliding type portable terminal in order to enhance the designability, and the fashionability thereof. Consequently, an increase in the cost thereof is caused,

Additionally, in the case of providing the dedicated member therein, a smooth sliding operation thereof is blocked unless the interference between the dedicated member and an elastic member displaced with the progress of a sliding operation is avoided. In a case where the area and the height occupied by the dedicated member are large, the dedicated member interferes with the elastic member. Thus, the elastic member is required to reduce in size. In a case where it is difficult to reduce in size the dedicated member and the elastic member, the sliding mechanism inevitably sacrifices an increase in the urging force and results in an increase in the size.

Further, the aforementioned sliding mechanism is attached to the rear side (surface opposite to a display portion) of the first casing so as to overlap with the first casing. As long as the portable terminal employs such an attachment structure, there is a limit to a reduction in thickness of the first casing, even in the case of performing the reduction in thickness of the member constituting the casing.

Furthermore, the aforementioned sliding mechanism uses a lot of metal parts. Ungrounded metal parts are changed in electric potential (electrified) when absorbing electromagnetic waves.

For example, in a case where the sliding mechanism of a portable information terminal disclosed in Patent Document 2 is implemented by the sliding mechanism disclosed in Patent Document 1, a radio circuit portion having a transmitter configured to control by a voltage is placed close to the sliding mechanism. Accordingly, sometimes, a correct frequency variation operation is disturbed.

Additionally, according to Patent Document 2, an antenna is placed at the bottom of the second casing. During a telephone call, the antenna is away from the head of a user. Thus, a reduction in the gain of the antenna is avoided. On the other hand, when a user inputs characters representing an e-mail in the portable telephone by holding the second casing thereof the user holds also an antenna portion thereof. Accordingly, the receiver sensitivity thereof in a standby mode has to be some what sacrificed. Thus, a means for additionally providing an antenna at a part (for example, in the first casing), which is not held by a user when the user grasps the second casing, is provided a method of enhancing the receiver sensitivity of the portable telephone even when the user inputs characters therein. However, simultaneously, the cost of the portable telephone is increased.

A circuit board provided on the first casing is connected by band-like wiring members arranged between the first casing and the second casing. The band-like wiring portions are small in cross-sectional area. Thus, the band-like wiring portions cause a transmission loss (voltage drop). Consequently, there have been demands for using wire members.

However, wire members are large in cross-sectional area. Thus, wire members are easily broken when stress iteratively acts upon a bend of each of the wire members, which is small in curvature, In a case where such wire members are arranged between the first casing and the second casing while the curvature of the bend of each of the wire members is increased, the thickness of each of the wire members is increased. Accordingly, no sliding type portable terminal using wire members has been proposed.

The invention is accomplished in view of the aforementioned circumstance. An object of the invention is to provide a sliding type portable terminal having many advantages, such as the following ones. That is, first, an attachment structure enabled to prevent an increase in thickness of the first casing as much as possible can be implemented. Second, occurrence of a malfunction can be prevented by grounding the slide potion formed of a metal with a simple structure. Third, even in the case of providing an antenna in the portable terminal, a high gain of the antenna can be obtained. Fourth wire members can be made to be difficult to break even in the case of using the wire members as the wiring members. Fifth, a flexible printed circuit board and a wire member can be made to be difficult to break even in the case of using the flexible printed circuit board and the wire member as the wiring members.

### <Means for Solving the Problems>

A sliding type portable terminal described in claim 1 of the present invention includes a first casing, a second casing, and a slide portion configured to connect the first casing and the second casing to each other so that the first casing and the second casing performs relative sliding while facing each other. The first casing has an opening portion in an opposed surface to the second casing. The second casing has a stationary portion provided on an opposed surface to the first casing. The slide portion includes a base portion a guide-rail portion, and an urging portion. The base portion is fixed to the stationary portion. The guide-rail portion has a guide portion configured to guide the base portion so that the base portion is slidable thereon, and has also an extension portion formed by extending the guide-rail portion so as to be protruded outwardly from the guide portion. The urging portion is provided so as to urge the base portion to a sliding end of the guide portion. The slide portion is attached in the opening portion so as to be directed from an inner surface side of the first casing to an outer surface side of the first casing. The slide portion allows the base portion and the urging portion to pass therethrough. The slide portion causes the extension portion to abut against a periphery of the opening portion and to be caught by the periphery thereof.

With this configuration, the guide-rail portion can be attached to the first casing without using screws. Thus, the appearance of the rear surface side of the first casing, which is exposed in an opened state, can be improved without using dedicated members, such as blindfold covers. Simultaneously, the cost can be prevented from being increased. Additionally, because the extension portion is formed on the outer side of the guide portion, the thickness of the first casing is not increased due to the extension portion. Consequently, a portable terminal, which meets a demand for reducing the thickness and the size thereof, can be implemented.

The sliding type portable terminal according to claim 2 of the present invention is featured by further including a first printed circuit board which is accommodated in the first casing and has a first ground pattern, in addition to constituents of the sliding type portable terminal according to claim 1 of the present invention. The sliding type portable terminal according to claim 2 of the present invention is featured in that an exposure surface of the slide portion, which is exposed to an inner side of the first casting, is electrically connected to the first ground pattern to ground the slide portion.

With this configuration, the slide portion formed of a metal is prevented from being electrified. Thus, occurrence of a malfunction can be avoided. In addition, in a case where both of the exposure surface and the first ground pattern are directly connected to each other, a dedicated component is unnecessary. Thus; the cost can be prevented from being increased. Further, even in the case of using the dedicated component, such as a spring mounted in the first ground pattern, the dedicated component is made to only abut against a surface of the guide-rail. Accordingly, the slide portion can be grounded using the dedicated component having a simple shape.

Consequently, the structure of a mold for the dedicated component can be simplified. The manufacturing cost of the portable terminal can be further decreased. The former is preferable in consideration of the cost. However, it is useful to select various design alternatives of configurations.

The sliding type portable terminal according to claim 3 of the present invention is featured by further including an antenna accommodated in the first casing, in addition to constituents of the sliding type portable terminal according to claim 1 of the present invention. The sliding type portable terminal according to claim 3 of the present invention is featured in that the first casing has a projection portion at an end in a direction of movement of the first casing when the first casing, is opened with respect to the second casing, and that the antenna is placed in the projection portion,

With this configuration, the slide portion is grounded. Consequently, a monopole antenna enabled to obtain a high antenna gain can be implemented by the sliding type portable terminal.

The sliding type portable terminal according to claim 4 of the present invention is featured by further including a wire member placed between the first casing and the second casing, in addition to constituents of the sliding type portable terminal according to claim 1 of the present invention. The sliding type portable terminal according to claim 4 of the present invention is featured in that both ends of the wire member are spaced from each other in a direction perpendicular to a direction of movement of the first casing with respect to the second casing so as to form a U-shaped bend portion in a state in which the first casing and the second casing are seen to overlap with each other.

The sliding type portable terminal according to claim 5 of the present invention is featured by further including a flexible printed circuit board-placed between the first casing and the second casing by being folded over itself. The sliding type portable terminal according to claim 4 of the present invention is featured in that the wire member is provided on an inner side of the folded flexible printed circuit board.

With this configuration, a flexible circuit board enabled to transmit and receive a large number of signals can be also placed in the portable terminal. That is, the flexible printed circuit board and the wire member are made to coexist therein.

### <Advantages of the Invention>

According to the present invention, in a structure of attaching the slide portion having an elastic member for giving an urging force, the head portion and the leading end of each screw are not exposed. Thus, the thickness of the first casing can be reduced. Occurrence of a malfunction can be avoided by grounding the slide portion formed of a metal with a simple structure. Consequently, even in the case of providing an antenna in a portable terminal, a high gain can be obtained.

Further, according to the present invention, the following advantages can be obtained. That is, even in the case of using a wire member as the wiring member, the breaking of the wiring member is difficult to occur. Moreover, even in the case of using both of a flexible printed circuit board and a wire member as the wiring members, the breaking of the wiring members is hard to occur.

### <Brief Description of the Drawings>

FIG. 1 includes perspective views each illustrating the appearance of a sliding type portable telephone according to a first embodiment of the present invention.
FIG. 2 is an exploded view illustrating the sliding type portable telephone according to the first embodiment of the present invention.
FIG. 3 is a longitudinally cross-sectional view of FIG. 1(a).
FIG. 4 is a transversally cross-sectional view of FIG. 1(a).
FIG. 5 is a block diagram illustrating an electrical configuration provided in casings of the sliding type portable telephone according to the first embodiment of the present invention.
FIG. 6(a) is an exploded perspective view illustrating first and second torsion coil springs, and FIG. 6(b) is a perspective view illustrating the first and second torsion coil springs.
FIG 7 includes plan views each illustrating the arrangement state of the first and second torsion coil springs.
FIG. 8 incudes views each illustrating a state in which a flexible wiring member is seen through a casing. FIG. 8(a) is a plan view illustrating a case where a main body portion is in a closed state. FIG. 8(b) is a side view of FIG. 8(a). FIG. 8(c) is a plan view illustrating a case where the main body portion is in a closed state. FIG. 8(d) is a side view of FIG. 8(c).
FIG. 9 includes views illustrating an operation of an antenna. FIG. 9(a) is a perspective view illustrating a case where the main body portion is in a closed state. FIG. 9(b) is a longitudinal cross-sectional view illustrating a case where the main body portion is in the closed state. FIG. 9(c) is a longitudinal cross-sectional view illustrating a case where the main body portion is in an opened state.
FIG. 10 includes views each illustrating the distribution of high-frequency electric current flowing through each of first and second ground patterns respectively provided on first and second printed circuit boards which are used in the sliding type portable telephone according to the first embodiment of the present invention.
FIG. 11 includes views each illustrating the distribution of high-frequency electric current flowing through each of first and second ground patterns respectively provided on first and second printed circuit boards which are used in the sliding type portable telephone according to the first embodiment of the present invention.
FIG. 12 includes views each illustrating the distribution of high-frequency electric current flowing through each of first and second ground patterns respectively provided on first and second printed circuit boards which are used in the sliding type portable telephone according to the first embodiment of the present invention.
FIG. 13 includes graphs each illustrating a VSWR characteristic of an antenna used in the sliding type portable telephone according to the first embodiment of the present invention.
FIG. 14 is an exploded perspective view illustrating a slide portion according to a second embodiment of the present invention.
FIG. 15 is a transversally cross-sectional view illustrating a sliding type portable telephone using the slide portion according to the second embodiment of the present invention.
FIG. 16 is an exploded perspective view illustrating a modification of a slide portion according to the present invention.
FIG 17 is an exploded perspective view illustrating an additional configuration of first and second torsion coil springs.
FIG. 18 is a plan view illustrating the arrangement state of the additional configuration of the first and second torsion coil springs.

### <Description of Reference Numerals and Signs>

- 1,85: main body portions of sliding type portable telephones (portable terminals)
- 2: upper casing (first casing)
- 3: lower casing (second casing)
- 4, 80: slide portions
- 6: display portions
- 9: first printed circuit board
- 10: antenna
- 23: operating portion
- 28: second printed circuit board
- 31, 81: guide-rail portions
- 32, 82: base portions
- 36: flexible printed circuit board
- 37: wire member
- 40: attachment-opening portion
- 46, 90: guide portions
- 47, 91: support portions
- 52, 95: extension portions
- 53, 99: central portions
- 56: sliding part

### <Best Mode for Carrying Out the Invention>

### (First Embodiment)

Hereinafter, a first embodiment of the present invention is described in detail with reference to the accompanying drawings. Incidentally, by applying the present invention to a sliding type portable telephone as the sliding type portable terminal of the present invention the following description is made.

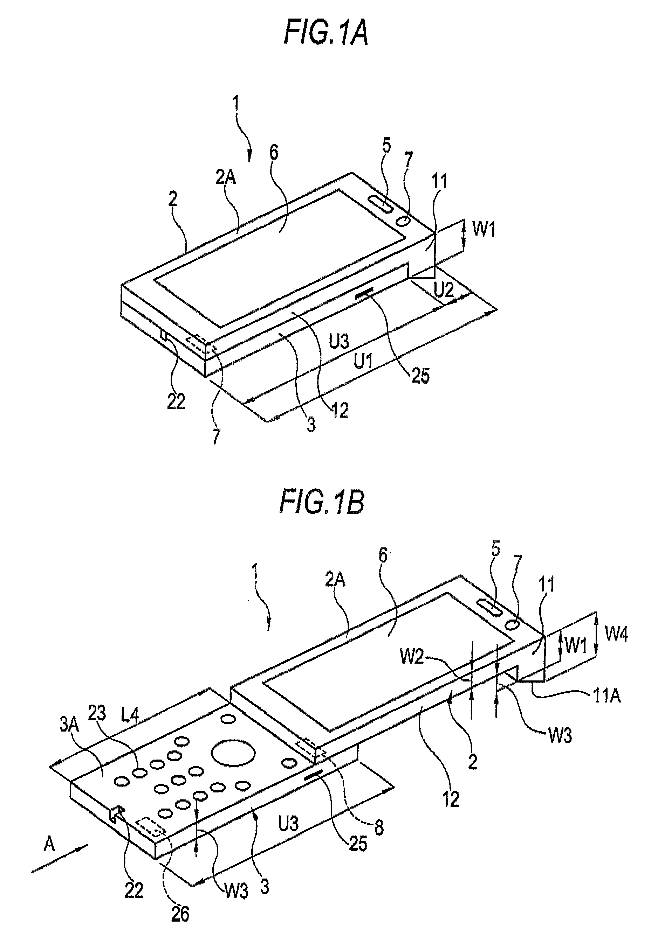

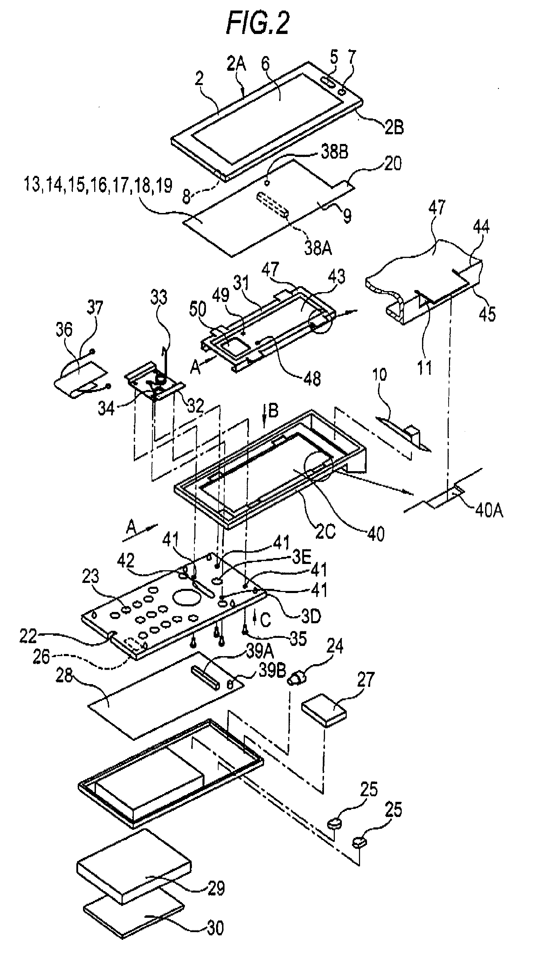

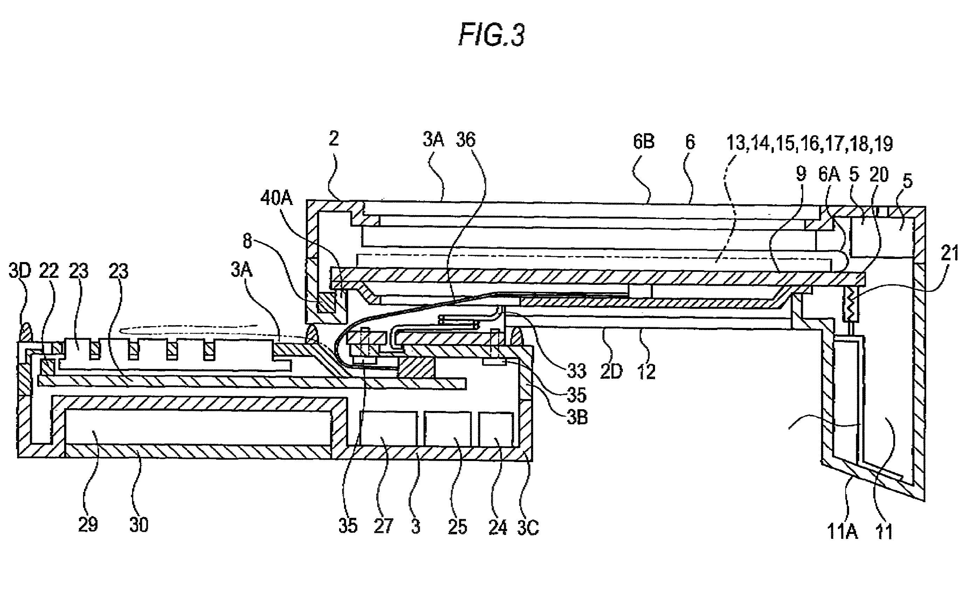

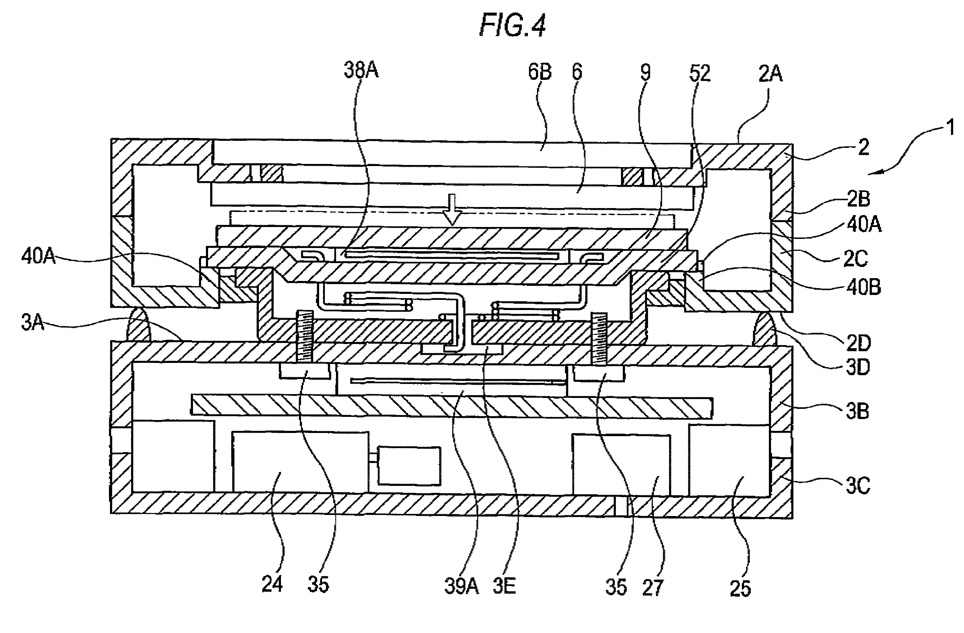

FIG. 1 includes perspective views each illustrating the appearance of a sliding type partable telephone according to a first embodiment of the present invention. FIG. 1(a) illustrates a closed state of the sliding type portable telephone. FIG. 1(b) illustrates an opened state thereof. FIG. 2 is an exploded view of FIG. 1. FIG. 3 is a longitudinally cross-sectional view of FIG. 1(a). FIG. 4 is a transversally cross-sectional view of FIG, 1(a).

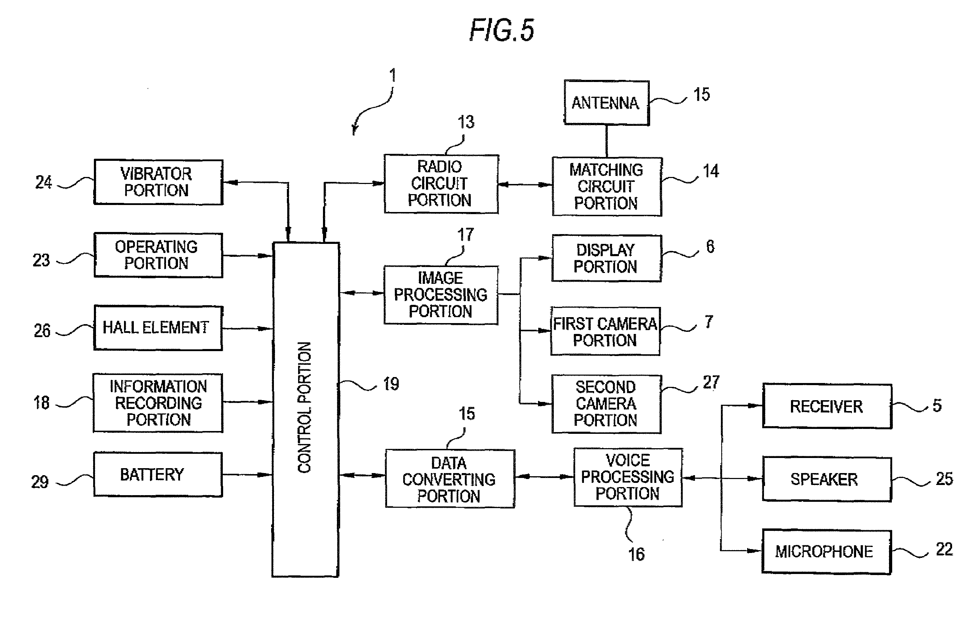

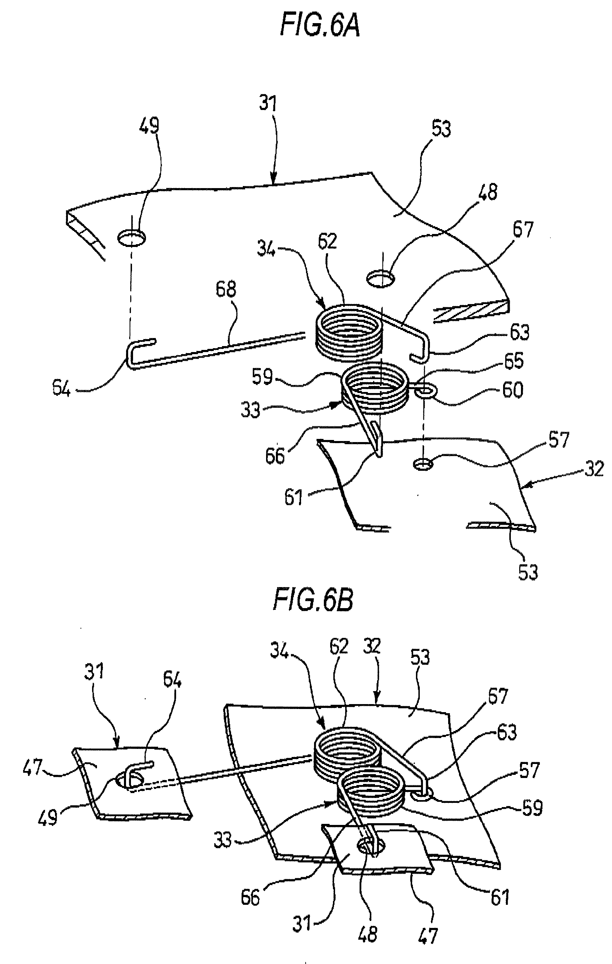

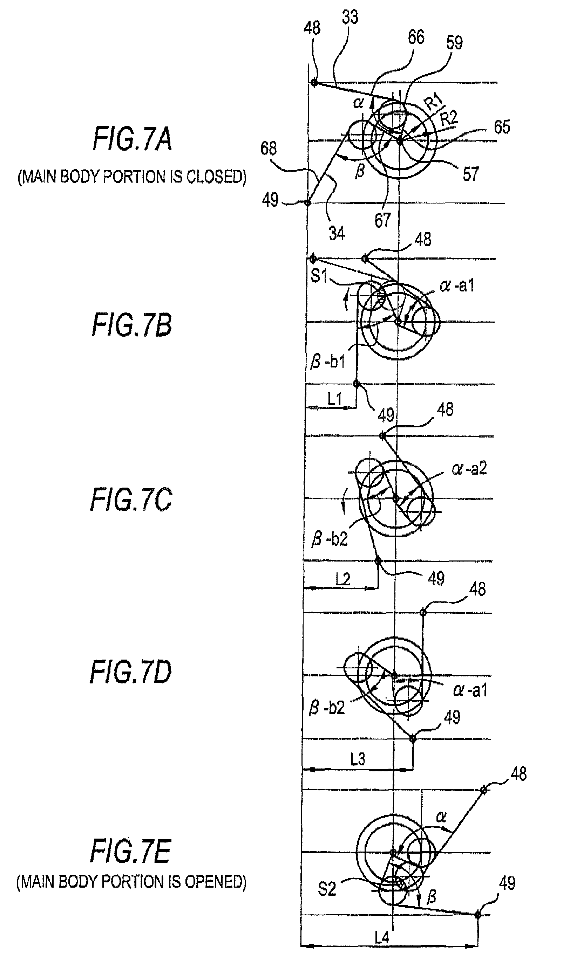

FIG. 5 is a block diagram illustrating an electrical configuration provided in casings of the sliding type portable telephone according to the first embodiment of the present invention. FIGS. 6(a) and 6(b) are exploded perspective views each illustrating first and second torsion coil springs. FIG. 7 includes plan views each illustrating the arrangement state of the first and second torsion coil springs. FIG. 7(a) illustrates a case where the main body portion is in a closed state. FIG. 7(b) illustrates a case where the guide-rail portion is slide-moved only by L1 with respect to a base portion 32. FIG. 7(c) illustrates a case where the guide-rail portion is slide-moved only by L2 with respect to the base portion 32. FIG. 7(d) illustrates a case where the guide-rail portion is slide-moved only by L3 with respect to the base portion 32. FIG. 7(e) illustrates a case where the guide-rail portion is slide-moved only by L4 with respect to the base portion 32 and where the main body portion is in an opened state.

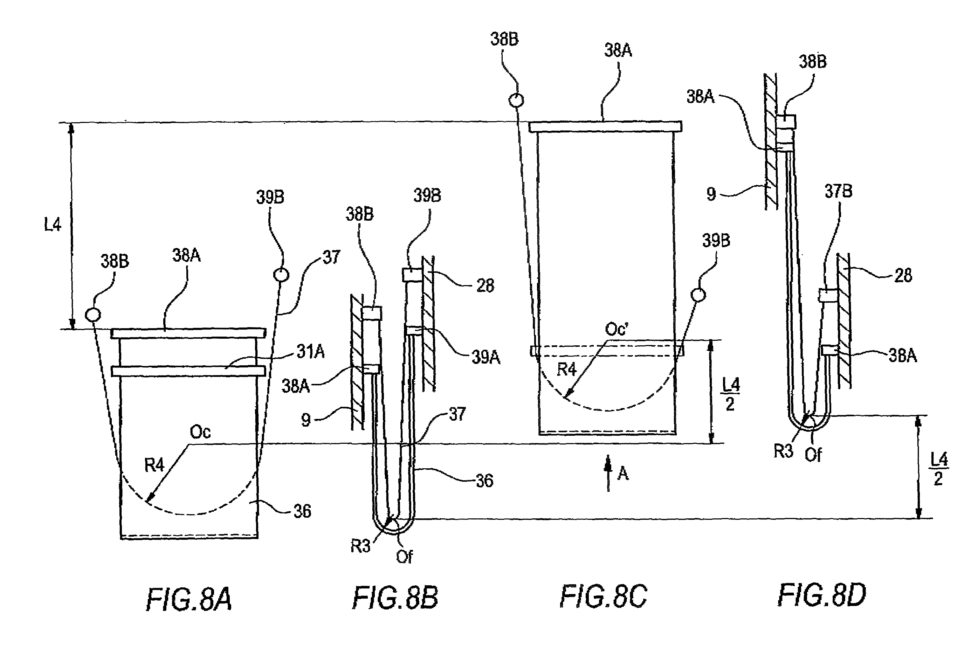

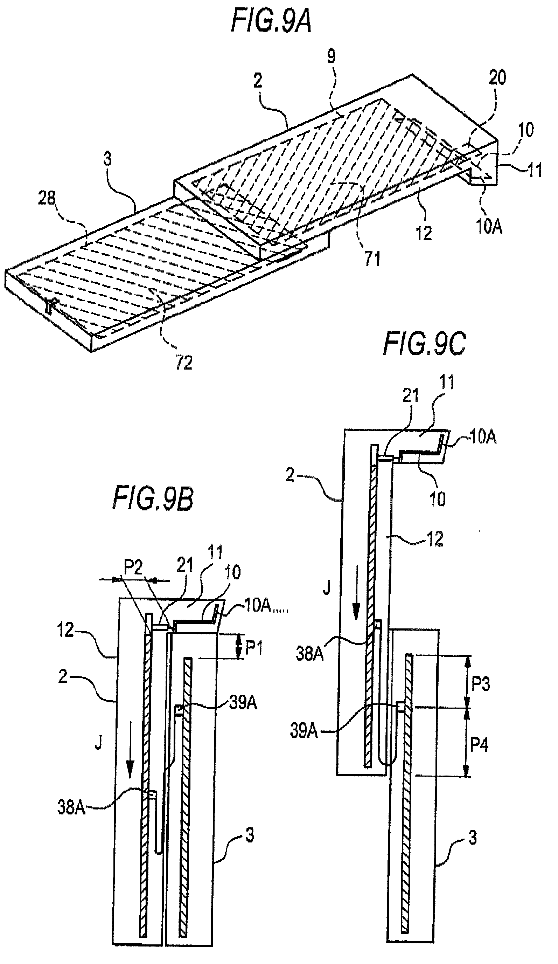

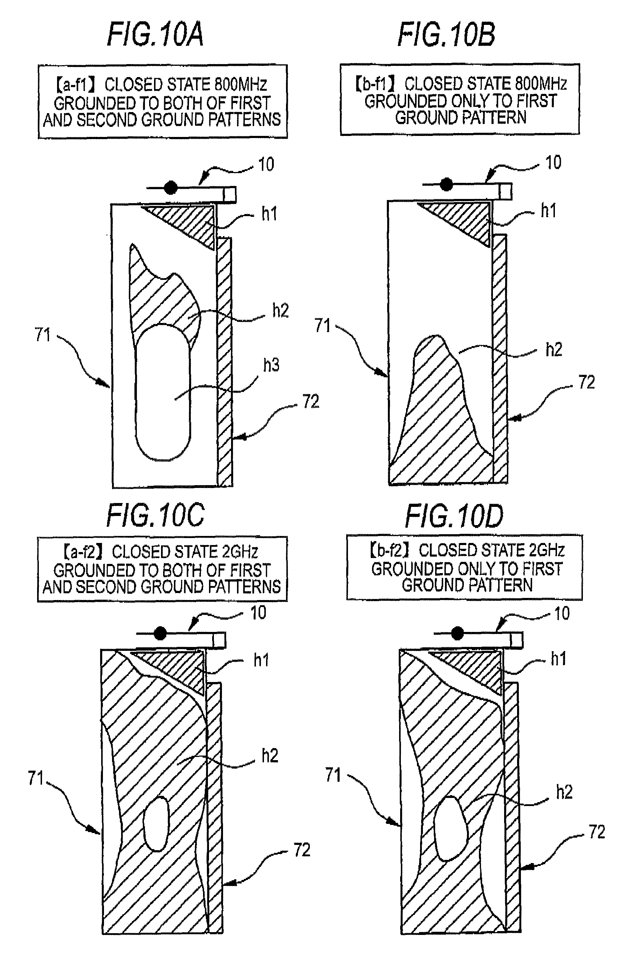

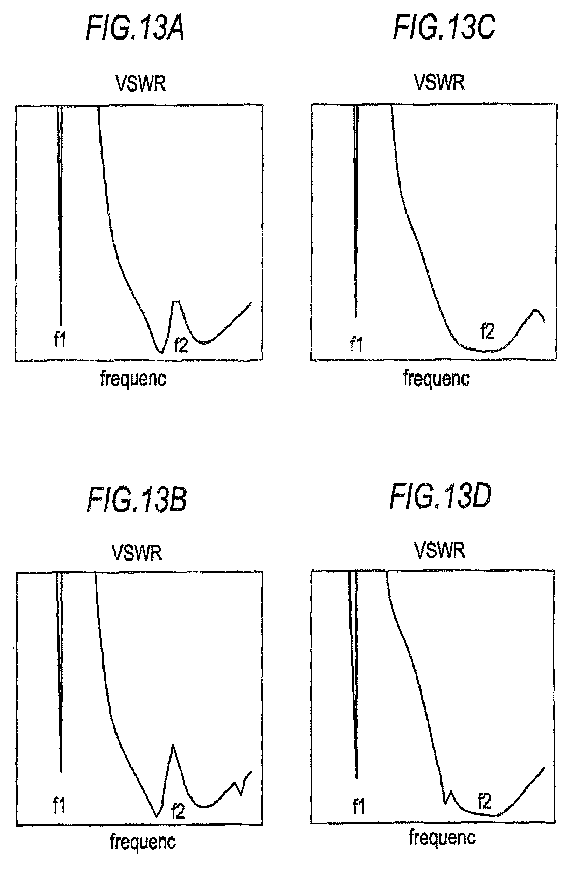

FIG. 8 includes views each illustrating a state in which a flexible wiring member is seen through a casing. FIG. 8(a) is a plan view illustrating a case where a main body portion is in a closed state. FIG. 8(b) is a side view of FIG. 8(a). FIG. 8(c) is a plan view illustrating a case where the main body portion is in a closed state. FIG. 8(d) is a side view of FIG, 8(c). FIG. 9 includes views illustrating an operation of an antenna. FIG. 9(a) is a perspective view illustrating a case where the main body portion is in a closed state. FIG. 9(b) is a longitudinal cross-sectional view illustrating a case where the main body portion is in the closed state. FIG. 9(c) is a longitudinal cross-sectional view illustrating a case where the main body portion is in an opened state. FIGS. 10 through 12 are views each illustrating the distribution of electric current flowing through each of a first ground pattern 71 provided on a first printed circuit board and a second ground pattern provided on a second printed circuit board, which are used in the sliding type portable telephone according to the first embodiment of the present invention. FIG. 13 includes graphs each illustrating a VSWR characteristic of an antenna used in the sliding type portable telephone according to the first embodiment of the present invention.

As illustrated in FIGS. 1 through 5, the sliding type portable telephone (hereunder referred to as a main body portion) 1 according to the present embodiment roughly includes a first casing (upper casing) 2, a second casing (lower, casing) 3, and a slide portion 4 slidably fixes the upper casing 2 and the lower casing 3. That is, these elements roughly constitute the main body portion 1. The casings of the main body portion 1 are connected to each other so as to be made by a sliding operation of the slide portion 4 to be slidable.

In a case where a user carries the portable telephone with him, and where a user checks an incoming mail, the portable telephone is used in a closed state in which the main body portion 1 is closed, as illustrated in FIG. 1(a). On the other hand, in a case where characters, numerals, and a telephone number are input when a user makes a call, the portable telephone is used in an opened state in which the main body portion 1 is opened, as illustrated in FIG 1(b).

The upper casing 2 is shaped like a box by combining an supper cover 2B, which constitutes a main surface 2A, with an upper case 2C that constitutes a rear surface. The upper casing 2 accommodates a receiver 5, a display portion 6, a first camera portion 7, a permanent magnet 8, a first printed circuit board 9, and an antenna 10. Among these elements, the display portion 6 is exposed in the main surface 2A of the upper casing 2. The rear surface 2D opposite to the main surface 2A of the upper casing 2 includes a projection portion 11 (whose thickness is W1), which does not overlap with the lower casing 3 in the closed state, and a superposition portion 12 (whose thickness is W2), which is placed downwardly from the projection portion 11 and overlaps with the lower casing 3 in the closed state. The rear surface 2D has a difference in height W3 (= W1-W2) from the main surface 2A. The thickness of the most leading end of the projection portion 11 is W4. The rear surface of the projection portion 11 is an inclined surface 11A that differs in thickness from the rear surface 2D by (W4 - W3). Further, the length U1 in the longitudinal direction of the upper casing 2 is a sum of the length U2 in the longitudinal direction of the projection portion 11 and the length U3 in the longitudinal direction of the superposition portion 12.

A radio circuit portion 13, a matching circuit portion 14, a data conversion portion 15, a voice processing portion 16, an image processing portion 17, an information recording portion 18, and a control portion 19 and so on are mounted on the first printed circuit board 9. Further, the first printed circuit board 9 is formed of an electric power supply portion 20 on which a spring terminal 21 (of the probe pin type incorporating a compression spring) is mounted.

On the other hand, the lower casing 3 is shaped like a box by combining a lower cover 3B, which constitutes the main surface 3A, with a lower case 3c constituting the rear surface 3B, and accommodates a transmitter (microphone) 22, an operating portion 23, a vibrator portion 24, a speaker 25, a Hall element 26, a second camera portion 27, a second printed circuit board 28, and a detachable battery 29.

Among these components, the microphone 22 and the display portion 6 are placed on the main surface 3A of the lower casing 3. The battery 29 is covered with a battery cover 30 that is attached thereto after the battery 29 is mounted in the lower casing 3. Further, the thickness of the lower casing 3 is equal to the difference W3 of the upper casing 2. Furthermore, the length in the longitudinal direction of the lower casing 3 is equal to that U3 of the superposition portion 12 of the upper casing 2.

The slide portion 4 slidably fixes the upper casing 2 and the lower casing 3 and includes mainly a guide-rail portion 31, a base portion 32 and urging portions (i.e., a first torsion coil spring 33 and a second torsion coil spring 34). In order to change the state of the main body portion 1 from a closed state to an opened state, the base portion 32 fixed to the lower casing 3 with four screws 35 is made to be slidable with respect to the guide-rail portion 31 fixed to the upper casing 2.

Further, in the vicinity of the slide portion 4, a flexible printed circuit board 36 and a wire member 37, which are flexible wiring members, are placed between the upper casing 2 and the lower casing 3 by being folded. An end of the flexible printed circuit board 36 is inserted into a connector 38A provided on a surface of the first printed circuit board 9, which is downwardly directed to the side of the lower casing 3. An end of the wire member 37 is inserted into a connector 38B adjoining the connector 38A. The other end of the flexible printed circuit board 36 is inserted into a connector 39A provided on a surface of the second printed circuit board 28, which is upwardly directed to the side of the upper casing 2. The other end of the wire member 37 is inserted into a connector 39B adjoining the connector 39A. Thus, the first printed circuit board 9 and the second printed circuit board 28 are electrically connected to each other.

As illustrated in FIG. 3, in the opened state, most of the flexible printed circuit board 36 is accommodated in the upper casing 2. In the closed state, most of the flexible printed circuit board 36 overlaps with the main surface 3A of the lower casing 3 and is indicated by a double-dashed-chain line. The wire member 37 similarly overlaps therewith. The drawing of the wire member 37 is omitted in FIG 3.

Further an attachment opening portion 40, in which the slide portion 4 is attached; is formed in the upper case 2C. A positioning portion 40A is concavely formed around the attachment-opening portion 40 so as to accommodate an extension portion that will be described later, and as to perform the positioning of the slide portion 4 with respect to the upper case 2C. The portable telephone is configured such that the slide portion 4 is mounted around the attachment-opening portion 40 while the positioning portion 40A performs the positioning of the slide portion 4. Thus, in a case where when the main body portion 1 is in an opened state, an external bending force and an external twisting force are applied thereto or where a user accidentally drops the portable terminal, stress is likely to be concentrated around the attachment-opening portion 40. Sometimes, a force is applied to the display portion 6, so that breakage of glass is caused.

Thus, the attachment-opening portion 40 is formed in the rear side of the display portion 6. A reinforcing rib 40B is erected on the entire circumference of the attachment-opening portion 40. Furthermore, the metallic slide portion 4 is attached in the attachment-opening portion 40. Thus, the stiffness of the entire upper casing 2 is enhanced.

Incidentally, the shape of the positioning means of the slide portion 4 to the upper casing 2C is not limited to the aforementioned shape. For example, the positioning can be implemented by forming cutout portions and holes around the slide portion 4, and providing ribs and bosses at parts corresponding to the cutout portions and the holes around the attachment-opening portion 40, and fitting the ribs or bosses to the cutout portions or holes, respectively.

This positioning can bring the overlapping between the upper casing 2 and the lower casing 3 into a normal state, even in any of the closed state and the opened state of the main body portion 1. That is, both the upper casing 2 and the lower casing 3 are aligned in outer shape (i.e., coincide in outer shape with each other). An unaligned state of the casings is not caused.

A stationary portion 41, through which the screws 35 penetrate, and a first slit 42, through which the flexible printed circuit board 36 and the wire member 37 are passed, are provided at places, which overlap with the upper casing 1 when the main body portion 1 is in the opened state, on the main surface 3A of the lower cover 38. A plurality of projections 3D for forming a predetermined gap between the upper casing 2 and the lower casing 3 are formed around the main surface 3A. The main surface 3A has a counterbore 3E that is provided in the vicinity of the stationary portion 41 so as to avoid the interference the first torsion coil spring and the main surface 3A. The upper cover 2B, the upper case 2C, the lower cover 3B, and the lower case 3C are formed of a resin member, such as ABS and PC.

In the closed state, the main body portion 1 including such composing elements is substantially W1 in thickness and U1 in length. The superposition portion 12 of the upper casing 2 is superposed on the lower casing 3. Thus, the main body portion 1 is shaped substantially like a rectangle. In the opened state, the main body portion 1 is in a state in which the upper casing 2 is moved in the direction of arrow A by L4 with respect to the lower casing 3.

Next, each composing element of the main body portion 1 of the sliding type portable telephone according to the present embodiment is described hereinafter more specifically.

The upper casing 2 is described below.

The receiver 5 is a first voice output portion that outputs a voice of a communication opponent party. At an incoming call, a user places his ear next to the receiver 5 and hears the voice of the opponent party.

The display portion 6 is placed on the main surface 2A of the upper casing 2 together with the receiver 5 and is provided closer to the bottom end (substantially at the center) than the receiver 5. A mark indicating a received electrical field strength, remaining battery capacity information, time information, incoming call information, and input characters and symbols are displayed in the display portion 6.

In any of the opened and closed state of the main body portion 1, a user can recognize display information displayed in the display portion 6. Then display portion 6 is constituted by a liquid crystal display (LCD) an organic EL or the like. The display portion 6 is connected to the first printed circuit board 9 by a display wiring member 6A constituted by a flexible printed circuit board having flexibility. The display portion 6 is provided with a transparent window 6B. A transparent window 6A constitutes a part of the main surface 2A.

The first camera portion 7 is provided next to the receiver 5. When a TV-phone call is made, an image of a user is taken. A taken image of the user is displayed in the display portion 6 as a mirror image. This image and a voice of the user are transmitted to a party at the other end.

The permanent magnet 8 is placed close to the display portion 6 on the bottom side of the upper casing 2.

The first print circuit board 9 is placed under the display portion 6.

The antenna 10 is placed in the projection portion 11 under the receiver 5.

The lower casing 3 is described below.

The operating portion 23 includes a call receiving button, a call terminating button, and operating buttons capable of adjusting the volume of sound output from the receiver 5 and the speaker 25, changing an operating mode to a manner mode, and performing selection/decision in a menu window, In order to input telephone numbers and characters, numerals, characters, and symbols are printed on an outer surface of the operating portion 23.

The microphone 22 and the operating portion 23 are provided on the main surface 3A of the lower casing 3 so as to be opposed to and covered with the rear surface 2D of the upper casing 2 when the main body portion 1 is in a closed state, and as to be exposed when the main body portion 1 is in an opened state.

Therefore, when the main body portion 1 is in an opened state, the microphone 22 and the operating portion 23 are exposed, and a user can input, for example, characters, symbols, and numerals, and can perform manipulation of the first camera portion 7 and the second camera portion 27, and so forth by manipulating the operating portion 23. When a user manipulates the operating portion 23, the bottom end of the upper casing 2 is present in front of the user's finger. In a case where a user having a long nail of a finger manipulates the operating portion 23, the operability of the operating portion 23 is reduced. Thus, a predetermined distance should be provided between the bottom end of the upper casing 2 and the operating portion 23. Thus, in a case where the state of the main body portion 1 is changed from the closed state into the opened state the longer the distance by which the upper casing 2 moves, the more preferable the operability of the operating portion 23 is.

Incidentally, in a case where the call-receiving, the call-terminating, the adjustment of the volume of sounds output from the receiver 5 and the speaker 25, the change of the operating mode to a manner mode, or the selection/decision in the menu widow is enabled even in the closed state, it is useful to add or change the positions of dedicated operating buttons to the bottom end of the display portion 6 of the upper casing 2 or to a side surface of the upper casing 2 or the lower casing 3, which is exposed to the outside in the closed state,

According to the first embodiment of the present invention an increase in the amount of a sliding motion is achieved. Thus, the distance, by which the finger is moved, is reduced and the operability for inputting characters is enhanced by forming all operating portions 23 on the main surface 3A of the lower casing 3 while the visibility of a character or an image is enhanced by increasing the size of the display portion 6 as much as possible.

The vibrator portion 24 vibrates in response to each incoming call to inform a user of the incoming call by the vibrations. In a case where the operating mode is set to be a manner mode, the vibrator portion vibrates in response to an incoming call to perform silent notification a user of the incoming call. The speaker 25 is a second voice output portion and outputs a ring tone and a voice to be output in a hands-free mode.

A Hall element 26 is provided on the second printed circuit board 28 to face the permanent magnet 8 in a case where the main body portion 1 is in a closed state. The permanent magnet 8 is closed to the Hall elements 26 in a case where the main body portion 1 is in the closed state. Thus, the magnetic field of the permanent magnet 8 is detected, The Hall element 26 outputs a detection signal to the control portion 19. Further, in a case where the main body portion 1 is in a closed state, the permanent magnet 8 is moved apart from the Hall element 26. Consequently, the magnetic field due to the permanent magnet 8 cannot be detected. Accordingly, the Hall element 26 does not a detection signal.

That is, when the Hall element 26 detects the permanent magnet 8, the main body portion 1 is in a closed state. When the Hall element 26 cannot detect the permanent magnet 8, the main body portion 1 is in an opened state. In a case where the main body portion 1 is in a closed state, a light source for illuminating the operating portion 23 turns off so as to reduce consumed electric power. In a case where the main body portion 1 is in an opened state, a light source for illuminating the operating portion 23 turns on, so that characters and symbols printed on the outer surface of the operating potion 23 can be clearly seen.

The second camera portion 27 is a region superposed on the upper casing 1. The second camera portion 27 is placed next to the vibrator 24 and the speaker 25. Thus, the second camera portion 27 can capture an image of the rear of display portion 6.

Both the second camera portion 27 and the aforementioned first camera portion 7 are configured so that light incident from an object thereupon passes through a group of lenses and is converted into an electric signal from a light signal by a photoelectric transducer, such as a CCD (Charge-Coupled Device), so as to generate image information. This image information is processed by the image processing portion 17. Subsequently, an image is generated in the display portion 6.

Thus, the display portion 6, the first camera portion 7, and the second camera portion 27 are connected to the image processing portion 17. Image information on images captured by the first camera portion 7 and the second camera portion 27 is recorded in the information recording portion 18 upon completion of capturing predetermined images. Incidentally, the information recording portion 18 can record telephone number information, voice information, image information on images (such as received images) other than the captured images, character information on e-mails in process of creation or transmitted and received e-mails, and so on.

The second printed circuit board 28 is provided under the operating portion 23. The battery 29 is provided on the side of an opposite surface of the second printed circuit board 28.

The control portion 19 is connected to and controls the operating portion 23, the vibrator portion 24, the Hall element 26, the radio circuit portion 13, the data conversion portion 15, the image processing portion 17, and the information recording portion 18. Additionally, the control portion 19 is connected also to the battery 29.

The radio circuit portion 13 is connected to the antenna 10 via the matching circuit portion 14. The radio circuit portion 13 is configured to process data received by the antenna 10 and to output the processed data to the data conversion portion 15. The matching circuit portion 14 matches the impedance of the antenna 10 with the input impedance of the radio circuit portion 13. On the other hand, the data conversion portion 15 is connected to the voice processing portion 16. The voice processing portion 16 is connected to the receiver 5, the speaker 25, and the microphone 22.

Accordingly, the data conversion portion 15 converts data received from the antenna 10 to voice data via the matching circuit portion 14, the radio circuit portion 13, and the control portion 19. Then, the data conversion portion 15 outputs the voice data to the voice processing portion 16.

Meanwhile, the voice processing portion 16 decodes the voice data to generate a voice signal. Then, the voice pocesing portion 16 outputs the voice signal to the receiver 5 and the speaker 25. On the other hand, the receiver 5 and the speaker 25 output voices corresponding to the voice signal transmitted from the voice processing portion 16.

Further, the voice processing portion 16 encodes a voice received by the microphone 22 to generate voice data. Then, the voice processing portion 16 outputs the generated voice data to the data conversion portion 15. The data conversion portion 15 converts the input voice data into communication data. Then, the data conversion portion 15 outputs the communication data to the radio circuit portion 13. The radio circuit portion 13 processes the received communication data and transmits the processed data as a radio signal wave from the antenna 10.

The slide portion 4 is described hereinafter.

The guide-rail portion 31 and the base portion 32 are formed of a metal thin plate. The guide-rail portion 31 includes a concave portion 43 at the center thereof. The guide-rail portion 31 includes also a support portion 47 for supporting two guide portions 46A and 46B each of which is formed of a first corner portion 44 and a second corner portion 45. like a letter "U". The guide portions 46A and 46B are formed at both ends of the support portion 47 so as to protrude toward the main. surface 3A of the lower casing 3. The concave portion 43 at the center of the support portion 47 is provided with a through hole 48 formed (at a predetermined place in the longitudinal direction of the concave portion 43) in the vicinity of the guide portion 46A, a through hole 49 formed (at a predetermined place in the longitudinal direction of the concave portion 43) in the vicinity of the guide portion 46B, and a second slit 50 through which the flexible wiring member passes.

In a case where the support portion 47 is placed so as to abut against the first printed circuit board 9, a gap is produced between the first printed circuit board 9 and the support portion 47. Thus, the concave portion 43 enables the mounting of devices on the first printed circuit board 9. For example, connectors 38A and 38B are mounted thereon.

The first through hole 48 and the second through hole 49 are configured to have a slight phase difference therebetween in the direction of arrow A so as to produce a gap between the first torsion coil spring 33 and the second torsion coil spring 34. The slide portion has cutout portions 51 respectively formed at four corners of the support portion 47. When the first corner portion 44 is formed, an extension portion 52 is formed thereat, without being bent, by extending the support portion 47.

The base portion 32 incudes a flat central portion 53, and two sliding parts 56A and 56B formed by erecting both ends of the central portion 53 due to the third corner portion 54 and by being configured due to the fourth corner portion 55 so as to be substantially parallel to the central portion 53 and so as to extend outwardly from the central portion 53. In the central portion 53, a third through hole 57 is formed (at a predetermined place in the base portion 32), and fourth through holes 58 are formed substantially in four corners, respectively: Additionally, screws are screwed into these through holes.

The first torsion coil spring 33 and the second torsion coil spring 34, which are formed of the same material and have the same wire diameter, are described below with reference to FIG. 6. As shown in FIG. 6, the first torsion coil spring 33 has a first coil portion (coil portion) 59 formed by being wound clockwise, a ring portion formed at one end side thereof (one end) 60, and a first folded portion 61 which is formed at the other end side thereof (the other end) by being folded substantially like a letter "U". The second torsion coil spring 34 has a second coil portion (coil portion) 62 formed by being wound counterclockwise, a second folded portion 63 formed at one end side thereof (one end) 60 by being folded substantially like a letter "U", and a third folded portion 64 which is formed at the other end side thereof (the other end) by being folded substantially like a letter "U".

The second folded portion 63 of the second torsion coil spring 34 is passed through the ring portion 60 of the first torsion coil spring 33. Then, the second folded portion 63 is caught in the third through hole 57 of the base portion 32 and is connected to the base portion 32.

The base portion 32, to which the first torsion coil spring 33 and the second torsion coil spring 34 are attached, is inserted into the guide portions 46A and 46B of the guide-rail portion 31 in the direction of arrow A so that both surfaces of each of the sliding parts 56A and 56B are sandwiched by an associated one of the guide portions 46A and 46B. Thus, the base portion 32 is passed through the first through hole 48 and the second through hole 49. Subsequently, the first folded portion 61 of the first torsion coil spring 33 is caught in the first through hole 48 and is attached thereto. Non-cutting-surfaces of each of the sliding parts 56A and 56B are made to abut against those of an associated one of the guide portions 46A and 46B, respectively. Consequently, the guide-rail portion 31 and the base portion 32 are electrically connected to each other.

Further, the third folded portion 64 of the second torsion coil spring 34 is caught in the second through hole 49 and is attached thereto.

In a state in which the base portion 32 is assembled to the guide-rail portion 31, the first torsion coil spring 33 and the second torsion coil spring 34 are interposed between the central portion 53 of the base portion 32 and the support portion 47 of the guide-rail portion 31.

The first coil portion 59 of the first torsion coil spring 33 is set to be dextrorse, while the second coil portion 62 of the second torsion coil spring 34 is set to be sinistrose.

Thus, an arm portion 65 constituting one end side part of the first screw coil spring 33 is placed at a lower part of the first coil portion 59 (close to the central portion 53). An arm portion 66 constituting the other end side part of the first torsion coil spring 33 is placed at an upper part of the first coil portion 59. An arm portion 67 constituting one end side part of the second screw coil spring 34 is placed at a lower part of the second coil portion 62 (apart from the central portion 53). An arm portion 68 constituting the other end side part of the second torsion coil spring 34 is placed at an upper part of the second coil portion 62.

Thus, in a state in which both of an end 59 of the first torsion coil spring and an end 60 of the second torsion coil spring are connected to the third through hole 57 of the base portion 32, it is unnecessary to lift the second torsion coil spring 34 off the base portion 32. Consequently, the thickness of each of the first torsion coil spring 33 and the second torsion coil spring 34, and the height of the space (the gap formed between the central portion 53 and the concave portion 43) for allowing each of the first torsion coil spring 33 and the second torsion coil spring 34 to intervene therebetween can be prevented from being increased,

Next, a method of assembling the main body portion 1 is described hereinafter.

First, the slide portion 4 is assembled to the upper case 2C, to which the antenna 10 is attached, through the attachment-opening portion 40 from the direction of arrow B. The first torsion coil spring 33 and the second torsion coil spring 34, and the base portion 32 pass through the attachment-opening portion 40 and are caught therein while the extension portion 52 is accommodated in a positioning portion 40A provided around the attachment-opening portion 40.

That is, the positioning portion 40A and the extension portion 52 have also the function of a stopper that prevents the slide portion 4 from passing through the attachment-opening portion 40.

Next, the lower cover 3B, to which the operating portion 23 is assembled, is opposed to the upper case 2C to thereby form a gap having a height of each projections 3D by the lower cover 3B and the upper case 2C. When the screws 35 are screwed from the direction of arrow C in this state, the base portion 32 is fixed to the stationary portion 41. Even in the case of trying to remove the upper case 2C from the lower cover 3B, the base portion 32 is fixed. In addition the guide-rail portion 32 cannot pass through the attachment-opening portion 40. Thus, the upper case 2C cannot be removed from the lower cover 3B. Further, even in the case of trying to attach the upper case 2C more closely to the lower cover 3B, the upper case 2C cannot be attached closely thereto due to the presence of the projections 3D.

Accordingly, the gap between the lower cover 3B and the upper case can be always maintained at a constant value.

Next, one end of the flexible printed circuit board 36 and one end of the wire member 37 are passed through the second slit 50 and are fit into the connectors 38A and 39B of the first printed circuit board 9. The other end of each of the flexible printed circuit board 36 and the wire member 37 is extended towards the bottom side of the upper casing 2 and is bent so as to wind around the outer side of the central portion 53 of the slide portion 4. Then, the other ends of the flexible printed circuit board 36 and the wire member 37 are passed through the first slit 42 and are fit into the connectors 39A and 39B, respectively.

Consequently, the first printed circuit board 9 and the second printed circuit board 28 are electrically connected to each other,

Next, the upper cover 2B, to which the receiver 5 and the first camera portion 7 are assembled, is assembled to the upper case 2C. Thus, the upper casing 1 is completed. Also, the lower case 3C, to which the vibrator portion 24, the two speakers 25, and the second camera portion 27 are assembled, is assembled to the lower cover 3B. Thus, the lower casing 3 is completed. Finally, the battery 29 and the battery cover 30 are mounted therein. Thus, the main body portion 1 is completed.

The extension portion 52 is mounted on the positioning portion 40A. The guide portions 46A and 46B constitute the rear surface 2D of the upper casing 2 and are contacted with the first printed circuit board. A thickness from the first printed circuit board 9 to the rear surface 2D is determined only by the thickness of each of the guide portions 46A and 46B.

Incidentally, if a side surface (which is formed of the second corner portion 45 and is the rear surface of a side surface on which the sliding parts 56A and 56B of the base portion 32 are mounted) is mounted on the upper case 2C, the thickness from the first printed circuit board 9 to the rear surface 2D is further increased.

Thus, according to a structure in which the extension portion 52 is mounted on the positioning portion 40A in order to minimize the aforementioned thickness (from the first printed circuit board 9 to the rear surface 2D), similarly to the first embodiment, the minimization of the thickness of the upper casing 2 can be achieved by causing the base portion 32 and the two torsion coil springs 33 and 34 to be passed through the opening portion. That is, because the lower case 2C does not overlap with the guide portions 46A and 46B, the distance from the first printed circuit board 9 to the rear surface 2D is determined by the thickness of each of the guide portions 46A and 46B.

The support portion 47 of the guide-rail portion 31 is opposed to the first printed circuit board 9. A ground pattern is formed on the surface of the opposed first printed circuit board and is made to abut against the surface of the guide-rail portion 31.

Thus, the base portion 32 is electrically connected to the guide-rail portion 31. Consequently, the slide portion 4 is grounded to the first printed circuit board 9.

Incidentally a surface of the first printed circuit board 9, which is exposed to the first printed circuit board 9, can be urged by adding for example, an electrically conductive spring member to a surface of the first printed circuit board 9 in order to electrically connect the first printed circuit board 9 and the guide-rail portion 31 to each other. Alternatively, the first printed circuit board 9 can be urged by forming a spring piece having a spring property at a part of the guide-rail portion using a cut-erecting portion. According to the first embodiment, in order to easily implement the electrical connection between both the first printed circuit board and the guide-rail portion at low cost, the guide-rail portion 31 is exposed to the first printed circuit board 9 and is fixed to the upper case 3C without using screws. Thus, screws can be prevented from being exposed to the outside. A configuration that does not require a blindfold cover is implemented.

Next, an operation, of the slide portion 4 is described with reference to FIG. 7.

FIGS. 7(a) to 7(e) illustrate a state in which the first torsion coil spring 33 and the second torsion coil spring 34 and the first through third through holes 57, 48, and 49 are seen through the casing.

FIG. 7(a) illustrates a state in which the base portion 32 is moved to a first position at the right-end side (one-end side) of the guide-rail portion 31. The first torsion coil spring 33 and the second torsion coil spring 34 are placed at the right side of the third through hole 57.

As described above, the second folded portion 63 of the second torsion coil spring 34 is inserted through the ring portion 60 of the first torsion coil spring 33. Moreover, the second folded portion of the second torsion coil spring 34 is attached thereto by penetrating through the third through hole 57 Thus, the first torsion coil spring 33 and the second torsion coil spring 34 are turnable around the central axis of the third through hole 57.

At that time, the radius of turn of the first coil portion 59 is a radius R1 from the center of turn, which is the center of the axis of the third through hole 57. The radius of turn of the first coil portion 59 is a radius R2 (R2>R1) from the center of turn, which is the center of the axis of the third through hole 57. The radii R1 and R2 are formed on the central portion 53 of the base portion 32.

Further, the arm portion 65 constituting one end part of the first torsion coil spring 33 and the arm portion 66 constituting the other end part thereof form a predetermined torsion angle α (incidentally, before this spring is attached to the base portion 32, the torsion angle is α+Δ). The vertex angle of the spring 33, which corresponds to the torsion angle α, is set clockwise around the third through hole 57 (i.e., a V-shaped chevron part of the profile of the spring is arranged clockwise, as viewed from above).

The arm portion 67 constituting one end part of the second torsion coil spring 34 and the arm portion 68 constituting the other end part thereof form a predetermined torsion angle β (incidentally, before this spring is attached to the base portion 32, the torsion angle is β+Δ). Similarly to the first torsion coil spring 33, the vertex angle of the spring 34, which corresponds to the torsion angle, is set clockwise around the third through hole 57 (i.e., a V-shaped chevron part of the profile of the spring is arrange clockwise, as viewed from above).

As shown in FIG. 7(a), the arm portion 65 constituting one end part of the first torsion coil spring 33 is inclined substantially leftwardly downwardly from the first coil portion 59 to the vicinity of the third through hole 57. The arm portion 66 constituting the other end part of the first torsion coil spring 33 is inclined substantially leftwardly downwardly from the first coil portion 59 to the first through hole 48.

The arm portion 67 constituting one end part of the second torsion coil spring 34 is inclined substantially rightwardly downwardly from the second coil portion 62 to the center of the third through hole 57. The arm portion 68 constituting the other end part of the second torsion coil spring 34 is inclined substantially leftwardly downwardly from the second coil portion 62 to the second through hole 49.

FIG 7(b) illustrates a state in which the base portion 32 moves leftwardly by L1 with respect to the guide-rail portion 31 (the guide-rail portion 31 moves rightwardly by L1 with respect to the base portion 32). In this state, the third through hole 57 becomes closer to the second through holes 48, 49 by a distance L1 in a sliding direction (the direction of arrow A and an opposite direction thereto). Thus, both the first torsion coil spring 33 and the second torsion coil spring 34 turns clockwise around the central axis of the third through hole 57. An initial torsion angle α is changed to α-a1. An initial torsion angle β is changed to β-b1.

The arm portion 65 constituting one end part of the first torsion coil spring 33 is inclined substantially leftwardly downwardly from the first coil portion 59 to the vicinity of the third through hole 57. The arm portion 66 constituting the other end part of the first torsion coil spring 33 is inclined substantially leftwardly downwardly from the first coil portion 59 to the first through hole 48. As compared with the state illustrated in FIG 7(a), the inclination of each of the arms is increased.

The arm portion 67 constituting one end part of the second torsion coil spring 34 is inclined substantially rightwardly downwardly from the second coil portion 62 to the center of the third through hole 57. As compared with the state illustrated in FIG. 7(a), the inclination of this arm portion is increased.

The arm portion 68 constituting the other end part of the second torsion coil spring 34 is dropped straightly downwardly from the second coil portion 62 to the second through hole 68 and is perpendicular to the sliding direction (the direction of arrow A and the opposite direction thereto).

In the state illustrated in FIG. 7(b) in comparison with the state illustrated in FIG. 7(a), a bending moment for changing the torsion angle to a smaller value is applied to the first torsion coil spring 33 and the second torsion coil spring 34. When the torsion angle is decreased (the initial torsion angle α is changed into a torsion angle α-a1), and the initial torsion angle β is changed into a torsion angle β-b1. A reaction force corresponding thereto acts upon the base portion 32 and the guide-rail portion 31. Thus, the state illustrated in FIG 7(b) is returned to the state illustrated in FIG. 7(a) by a component force of the reaction force in the sliding direction. The force for returning the state is hereinafter referred to as an urging force,

In a case where the urging force is small, an action of changing the main body portion 1 from the opened state to the closed state is easily caused. Alternatively, a reverse operation opposite thereto is easily caused.

The present embodiment is adapted so that a desired urging force can easily be obtained by using the two springs. Consequently, for example, in a case where a force is accidentally applied to the portable terminal in a pocket of a user's cloth, and where the main body portion 1 is changed from -a closed state to an opened state in which the base portion moves by L1, the state of the main body portion 1 is returned by the aforementioned urging force to the closed state. Thus, the main body portion is adapted so as not to be easily changed into the opened state in a pocket.

Additionally, in FIG. 7(b), the first coil portion 59 in the state illustrated in FIG. 7(a) is indicated by a double-dashed-chain line. The cross-section of the second coil portion 62 partly overlaps with that indicated by the double-dashed-chain line. That is, the aforementioned displacement by the distance L1 causes the second coil portion 62 to move closer to the first coil portion 59. However, the first coil portion 59 turns in the same direction (a clockwise direction indicated by an arrow) as the second coil portion 62. Thus, the collision between the first coil portion 33 and the second coil portion 34 is avoided.

The second coil portion 62 is turned in the direction of an arrow to a position, at which the cross-section of the second coil portion 62 partly overlaps with that of the first coil portion 59 placed at the position thereof before the displacement thereof by the distance L1, Thus, each of the arm portion 66 constituting the other end part of the first torsion coil spring 33 and the arm portion 68 constituting the other end part of the second torsion coil spring 34 can be configured to have a predetermined length. The longer the arm portions 66 and 68, the distance at which the base portion 32 slides can be increased.

If the same amount as that obtained in the present embodiment is obtained in a state in which the arm portions are short in length, a change in the torsion angle is large. Thus, stress generated in each of the springs is increased. There is a fear of breakage of the torsion coil spring.

Hereinafter, an arrangement space for arranging each of the first torsion coil spring 33 and the second torsion coil spring 34 is described.

When the first torsion coil spring 33 and the second torsion coil spring 34 used for obtaining the urging force are exposed from the outer surface of the main body portion 1, a user can easily touch the torsion coil springs in any of the closed state and the opened state of the main body portion 1. Thus, there is a fear that a user may carelessly deform the torsion coil spring.

Consequently, even in any of the closed state and the opened state of the main body portion, the torsion coil springs should be placed in a region, in which the upper casing 2 is superposed on the lower casing 3, to prevent the torsion coil springs from being exposed. In addition, preferably, this space is small as much as possible, because the area of the operating portion 23 is small in a case where this space is larger.

Thus, in the present-embodiment, a region required to move the second coil portion 62 is made to overlap with a space required to move the first coil portion 59. Consequently, a summation of regions required to move the first torsion coil spring 33 and the second torsion coil spring 34, respectively, is reduced while the regions required to move the coil springs 33 and 34 are assured.

That is, the summation, of the required regions is reduced by a region S1 (a shaded portion in FIG. 7(b)), in which the cross-section of the first coil portion 59 partly overlaps with that of the second coil portion 62. Accordingly, it is unnecessary to increase the region in which the upper casing 2 and the lower casing 3 are superposed. Thus, the space in which the operating portion 23 is placed is assured.

FIG. 7(c) illustrates a state in which the guide-rail portion 31 is moved rightwardly from the closed state by L2 with respect to the base portion 32. The initial torsion angle α is changed into (α - a2) (a2>a1). The initial torsion angle β is changed into (β - b2) (b2>b1). The torsion angle of the first torsion coil spring 33 is substantially minimized in a state in which the distance between the second through hole 49 and the third through hole 57 is shortest. This state is closest to the state illustrated in FIG. 7(c), among the states illustrated in FIGS. 7(a) through 7(e).

The arm portion at one end side of the first torsion coil spring 33 is inclined substantially leftwardly upwardly from the first coil portion 59 to the vicinity of the third through hole 57. The inclination of this arm portion in this state is increased from that of this arm portion in the state illustrated in FIG 7(b). The clockwise turn of second coil portion 62 is reversed to the anticlockwise turn thereof (turn in the direction of an arrow).

The arm portion 67 constituting one end side part of the second torsion coil spring 34 is inclined substantially rightwardly downwardly from the second coil portion 62 to the center of the third through hole 57. The arm portion 68 constituting the other end side part of the second torsion coil spring 34 is inclined substantially rightwardly downwardly from the second coil portion 62 to the second through hole 49.

That is, the arm portion 68 constituting the other end side part of the second torsion coil spring 34 is inclined in the state illustrated in FIG. 7(a), and is vertical in the state illustrated in FIG. 7(b), and is inclined along a direction opposite to the direction in which the arm portion 68 is inclined in the state illustrated in FIG 7(a). Simultaneously, the direction of turn of the second coil portion 62 is reversed to the direction of an arrow.

Further, in a case where a distance, at which the guide-rail portion 31 is moved, is close to that of the guide-rail portion 31 in the state illustrated in FIG. 7(c), the component force in the sliding direction of the force generated by each of the torsion coil springs 33,34 is close to 0. That is; most of a force generated by the two torsion coil springs 33 and 34 acts in a direction perpendicular to the sliding direction. A slight component force in the sliding direction is cancelled. Consequently, the guide-rail portion 31 is not moved in any of the sliding end sides with respect to the base portion 32.

FIG. 7(d) illustrates a state in which the guide-rail portion 31 is moved from the closed state by L3 rightwardly with respect to the base portion 32. Both the first coil portion 59 and the second coil portion 62 continue clockwise and anticlockwise turns, respectively. An initial torsion angle α of the first torsion coil spring 33 is α-a1. An initial torsion angle β of the second torsion coil spring 34 is nearly equal to β-b2.

The arm portion 65 constituting one end side of the first torsion coil spring 33 is inclined leftwardly upwardly and nearly vertically from the first coil portion 59 to the center of the third through hole 57, The inclination of this arm portion is further increased from that of this arm in the state illustrated in FIG. 7(c). The arm portion 66 constituting the other end side part of the first torsion coil spring 33 extends straightly upwardly from the first coil portion 59 to the first through hole 48 and is vertical with respect to the sliding direction.

The arm portion 67 constituting one end side part of the second torsion coil spring 34 is inclined substantially rightwardly downwardly from the second coil portion 62 to the third through hole 57.

The arm portion 68 constituting the other side part of the second torsion coil spring 34 is inclined substantially rightwardly downwardly from the second coil portion 62 to the second through hole 49. The inclination of the arm portion 68 is smaller than that thereof in the state illustrated in FIG. 7(c).

In the state illustrated in FIG 7(d), the guide-rail portion 31 is urged rightwardly (in the direction of arrow A) by an urging force, which is generated by the two torsion coil springs, with respect to the base portion 32. That is, the state illustrated in FIG. 7(e) described later is obtained.

FIG 7(e) illustrates a state in which the guide-rail portion 31 is moved rightwardly by L4 with respect to the base portion 32. This state is also an opened state of the main body portion 1, in which the base portion 32 is moved to the left end side (opposite end side) of the guide-rail portion 31..

The first coil portion 59 turns counterclockwise from the state illustrated in FIG. 7(d). That is, in.the states respectively illustrated in FIGS. 7(a) through 7(d), the first coil portion 59 turns clockwise. Subsequently, the first coil portion 59 turns reversely.

The torsion angle of the first torsion coil spring 33 is substantially α. The torsion angle of the second torsion coil spring 34 is substantially β, to be approximately the same as in the state illustrated in FIG. 7(a).

The arm portion 65 constituting one end side of the first torsion coil spring 33 is inclined leftwardly upwardly and nearly vertically from the first coil portion 59 to the vicinity of the third through hole 57. The inclination of this arm portion is reduced from that of this arm in the state illustrated in FIG. 7(d). The arm portion 66 constituting the other end side part of the first torsion coil spring 33 extends rightwardly upwardly from the first coil portion 59 to the first through hole 48.

The arm portion 67 constituting one end side part of the second torsion coil spring 34 is inclined substantially rightwardly upwardly from the second coil portion 62 to the center of the third through hole 57. The arm portion 68 constituting the other side part of the second torsion coil spring 34 is inclined substantially rightwardly downwardly from the second coil portion 62 to the second through hole 49. The inclination of the arm portion 68 is smaller than that thereof in the state illustrated in FIG. 7(d).

Hereinafter, the urging force is summarized.

In a case where the first through hole 48 and the second through hole 49 are located at the left side of the third through hole 57, the guide-rail portion 31 is leftwardly (a direction opposite to the direction of arrow A) urged against the base portion 32. When the first through hole 48 and the second through hole 49 approach the third through hole 57 from the left side thereof, the urging force is gradually increased. When the component forces in the direction of arrow A of the first and second torsion coil springs are balanced with each other, the urging force is substantially zero.

Further, when the first through hole 48 and the second through hole 49 pass through the third through hole 57, so that the component forces are unbalanced, the orientation of the urging force is reversed. The urging force urges rightwardly (in the direction of the arrow) the guide-rail portion 31 toward the base portion 32. In a case where the first and second through holes48 and 49 approach the third through hole 57 when the first through hole 48 and the second through hole 49 are located at the right side of the third through hole 57, the guide-rail portion 31 is urged rightwardly (in the direction of arrow A) towards the base portion 32.

in FIG. 7(e), the first coil portion 59 in the state illustrated in FIG. 7(d) is indicated by a double-dashed-chain line. The cross-section of the second coil portion 62 partly overlaps with that indicated by the double-dashed-chain line (a shaded part S2). That is, in a case where the displacement by the distance L4 is performed after the aforementioned displacement by the distance L3, the second coil portion 62 moves closer to the first coil portion 59. However, the first coil portion 59 turns in the same direction (a counterclockwise direction) as the second coil portion 62. Thus, the collision between the first coil portion 59 and the second coil portion 62 is avoided.

Consequently, as the displacement by the distance L4 is performed, the second coil portion 62 is turned to a place, at which the cross-section of the second coil portion 62 partly overlaps with that of the first coil portion 59 placed at the position thereof just before the displacement thereof by the distance L4. Thus, the aforementioned occupied area by the dedicated member at this place is decreased.

That is, in a case where the guide-rail portion 31 moves in the sliding direction with respect to the base portion 32, when the base portion 32 becomes closer to the sliding end of the guide-rail portion 31, the cross-section of one of the torsion coil springs is made to overlap with that of the other torsion coil spring positioned at a locus thereof to thereby avoid the collision therebetween. Consequently, a summation of the operation regions respectively required to move both the torsion coil springs is minimized.

Moreover, the lengths of the arm portions of the torsion coil springs attached to the first through hole 48 and the second through hole 49 can be increased. Consequently, a sliding length and a magnitude of the urging force can be increased.

Accordingly, the portable terminal can be prevented from being accidentally opened and closed while a space, in which the operating portion 23 is arranged, is assured.

Hereinafter, a supplemental explanation of the lengths of the aforementioned arm portions and the radii of turn of the coil portions is described,

For example, in a case where the arm portion 68 at the other side of the second torsion coil spring 34 is set to be short, and the second through hole 49 is positioned at the same place as set in the arrangement state shown in. FIG. 7(a), the second coil portion 62 is placed at a position to which the second coil portion 62 is turned counterclockwise from the position thereof placed in the state shown in FIG. 7(a). At that time, a change in the torsion angle (i.e., a difference from the initial value β+Δ) is smaller than that in the torsion angle in the state illustrated in FIG. 7(a). Thus, the magnitude of the generated urging force is reduced. Further, in a case where the arm portion 68 is set to be long, and the second through hole 49 is positioned at the same place as set in the arrangement state shown in FIG. 7(a), the second coil portion 62 is placed at a position to which the second coil portion 62 is turned clockwise from the position thereof placed in the state shown in FIG. 7(a). Thus, the first coil portion 59 collides with the second coil portion 62.

Further, for example, in a case where the radius of turn R2 is equal to that of turn R1 in the state illustrated in FIG. 7(a), the torsion angle β is increased to a value close to the predetermined torsion angle β+Δ. Thus, the magnitude of the generated urging force is reduced.

Consequently, the radii of turn of the two coil portions are differentiated while the arms of the two torsion coil springs are lengthened, Thus, both of the increase in the amount of a sliding motion and the minimization of the occupied area are achieved, while the magnitude of the urging force is increased.

As described above, the slide portion 4 for slidably guiding the base portion 32 to both the sliding ends of the guide-rail portion 31 is configured such that when the first torsion coil spring 33 and the second torsion coil spring 34 turn during the base portion slides thereon, the torsion coil springs have the same center of turn.

When the base portion 32 moves by L1 from one of the sliding ends of the guide-rail portion 31 to the center thereof, the direction of turn of the fist coil portion 59 is set to be the same as that of turn of the second coil portion 62. Upon completion of moving the base portion 32 by L1, the second torsion coil sprint 34 is reversed. At the displacement thereof by L4 before the first torsion coil spring 33 and the second torsion coil spring 34 collides with each other, the turn of the first torsion coil spring 33 is stopped, In the period between the displacement thereof by L3 and the displacement thereof by L4, the direction of turn of the fist coil portion 59 is set again to be the same as that of turn of the second coil portion 62.

Accordingly, the occupied area needed to enable the first torsion coil spring 33 and the second torsion coil spring 34 to turn can be reduced.

The occupied area is the area of a regions, in which the upper causing 2 and the lower casing 3 overlap with each other when the main body portion 1 is in an opened state. Thus, the area of the region, in which the upper casing 2 and the lower casing 3 overlap with each other when the main body portion 1 is in an opened state, can be reduced by decreasing the occupied area. Concurrently, the arm portions 66 and 68 of the first and second torsion coil springs 33 and 34 connected to the first and second through holes 48 and 49 can be lengthened. Consequently, the amount of the sliding motion can be increased.

Accordingly, the area of a region, in which the operating portion 23 is formed, can be increased. Thus, the sizes and the intervals of buttons arranged on the main surface 3A of the lower casing 3 can be increased. Consequently, even users having large hands and long nails can easily manipulate the portable terminals. In addition, components of the operating portion 23 can be formed on the same surface, Thus, the operability can be improved.

Further, according to the first embodiment, the second torsion coil spring 34 is caught in and is connected to the base portion 32 while the second folded portion 43 of the second torsion coil spring 34 is inserted into the ring portion 40 of the first torsion coil spring 33. Thus, the first torsion coil spring 33 and the second torsion coil spring 34 can be attached thereto without using the dedicated components (while preventing the increase in the cost).

Moreover, the slide portion 4 is in the main body portion 1. Thus, the region for placing the operating portion 23 can be prevented from being reduced in size (or the area thereof) while the (urging) force used to move the lower casing 3 with respect to the upper casing 2 is increased.

Incidentally, according to the first embodiment, ordinary torsion coil springs, the coil center diameter of each of which is common to all wire turns thereof, are used. According to another mode of the present embodiment, torsional stress can be reduced by fabricating each torsion coil spring by forming each of the coil portions into a spiral shape like a spiral coil, providing a bend portion for overlapping a spiral-center-side end portion with a spiral portion in the torsion coil spring, and shaping the coil portion on the outer side of the spiral portion.

That is, it is useful to use the spring of a structure that has a winding portion, one end of which is connected to the base portion 32 and the other end of which is connected to the guide-rail portion 31 so that the one end side part and the other end side part of the winding portion constitute a V-shaped part whose vertex angle is a torsion angle and is directed to the direction of turn around the axis of turn.

Next, the flexible wiring member is described hereinafter with reference to FIG. 8.

As shown in FIGS. 8(a) and 8(b) illustrating a closed state of the main body portion 1, the flexible printed circuit board 36 is connected to the connector 38A and to the connector 39A placed higher than the connector 38A. The wire member 36 is connected to the connector 38B and to the connector 39B placed higher than the connector 38B. Consequently, the flexible circuit board 36 is cross-sectionally formed into a circular arc which is centered at Of and has a radius R3 in the direction of thickness of the main body portion 1 (direction in which the upper casing 2 and the lower casing 3 overlap with each other) The wire member 37 is placed at the inner side of the flexible printed circuit board 36. The wire member 37 is folded to form a circular arc which is centered at Oc and has a radius R4 in the direction of width of the main body portion 1 (direction in the central axis of the circular arc having the radius R3) and which is substantially U-shaped.

As shown in FIG. 8(b), the wire member 37 is in a state in which the circular arc is inclined laterally by the distance between the first printed circuit board 9 and the second printed circuit board 28.

FIGS. 8(c) and 8(d) illustrate an opened state in which the upper casing 2 is moved with respect to the lower casing 3 by L4 in the direction of arrow A. The flexible printed circuit board 36 is connected to the connector 38A and to the connector 39A placed lower than the connector 38A. The wire member 36 is connected top the connector 38B and to the connector 39B placed lower than the connector 38B. Consequently, the flexible printed circuit board 36 is cross-sectionally formed into a circular arc which is centered at Of and has a radius R3 in the direction of thickness of the man body portion 1. While the wire member 37 remains placed at the inner side of the flexible printed circuit board 36 the wire member 37 is folded to form a circular arc which is centered at Oc' and has a radius R4 in the direction of width of the main body portion 1 and which is substantially U-shaped. Incidentally, the wire member 37 is in a state in which the circular arc 4 is inclined laterally by the distance between the first printed circuit board 9 and the second printed circuit board 28. The inclination of the circular arc R4 is the same as that of the circular arc R4 illustrated in FIG. 8(b).

Next, an operation of the flexible wire member is described hereunder.

When the upper casing 1 is moved by L4 with respect to the lower casing 3 (FIG. 8 illustrates that the connector 38A is moved by L4 in the direction of arrow A), the circular arc of the flexible printed circuit board 36 is moved so that the center Of is moved in the direction of arrow A by L4/2 to the center Of'. The circular arc of the flexible printed circuit board 37 is moved so that the center Oc is moved in the same direction by L4/2 to the center Of

That is, when the state of the main body portion 1 is changed from the closed state to the opened state, both of the center O_{f} of the flexible printed circuit board 36 and the center Oc of the wire member 37 are displaced by L4/2. Thus, the generation extra lengths of the flexible printed circuit board 36 and the wire member 37 can be prevented. Consequently, the flexible printed circuit board 36 and the wire member 37 can be prevented from protruding outwardly from the main body portion 1. Alternatively, the wiring member can be prevented from being broken due to the fact that the main body portion 1 is not fully opened by the protruded parts of the wiring member, which lay across the main body portion 1 in a tensioned condition. Additionally, the fitting of the wiring members to the connectors can be prevented from being cancelled.

In addition, the center Of of the flexible printed circuit board 36 and the center Oc of the wire member 37 are moved in the same direction by the same distance. Thus, for example, the circular arc of the flexible printed circuit board 36 and that of the wire member 37 neither collide with each other nor give stress to each other.

Further, the direction, in which the circular arc of the wire member 37 is formed, is substantially perpendicular to the direction in which the circular arc of the flexible printed circuit board 36 is formed. Thus, as compared with the case of forming the circular arc of the wire member 37 and that of the flexible printed circuit board 36 in the same direction, the curvature of each circular arc can be increased.

Generally, the magnitude of stress generated in the wire member 37, whose thickness is larger (thicker) than that of the flexible printed circuit board 36, can be reduced by increasing the curvature of the circular arc thereof. In the case of placing the wire member 37 in the same direction of the flexible printed circuit board 36 by bending the wire member 37, the curvature of the circular arc thereof is small. Consequently, the magnitude of the generated stress is large.

Accordingly, the bent part of the wire member 37 is formed in a direction perpendicular to the direction in which that of the flexible printed circuit board 36 is formed. Therefore; the magnitude of the stress generated in the wire member 37 is reduced, The sliding type portable telephone is used so that the main body portion 1 is opened and closed at each of operations, such as a call-receiving operation, a call-transmitting operation, and operation of transmitting and receiving e-mails, and that stress is iteratively applied to the flexible printed circuit board 36 and the wire member 37 by the sliding. With the aforementioned configuration, the lifetime characteristic of the wiring member can be improved (the wiring member can be prevented from being broken).

Although the first embodiment has been described as an example of the configuration in which the flexible printed circuit board 36 is used to transmit and receive signals between the first printed circuit board 9 and the second printed circuit board 28, and that the wire member 37 is used as an electric power supply line for supplying electric power from the positive electrode of the battery 29 to the first printed circuit board 9. However, the width and the thickness of the line are small. Thus, a voltage drop is caused. Accordingly, in the present embodiment, a dedicated line is provided in addition to the flexible printed circuit board 36. However, the use of both of the flexible printed circuit board 36 and the dedicated line is not necessarily used in another mode of the present embodiment. The portable telephone can use only one of the flexible printed circuit board 36 and the dedicated line. In the case of using only the wire member 37, the flexible printed circuit board 36 is absent. Thus, the condition for placing the wire member 37 at the inner side of the flexible printed circuit board 36. is eliminated. However, it is sufficient to set the direction of forming the circular arc R3 such that the circular are R3 is formed in the aforementioned manner in plan view.

That is, in the case of using both the flexible printed circuit board 36, and the wire member 37, the first embodiment has the aforementioned configuration. Thus, the lifetime characteristic of the main body portion 1 is not degraded. Such a structure, in which both the flexible circuit board and the wire member coexists, has been described in detail.

Incidentally, in the case of arranging the wire member 37 at the outer side of the flexible printed circuit board 36, the difference between stress generated in this case and stress generated in the case of arranging the wire member 37 at the inner side thereof is very small. However, the inclination of the wire member 37 in the case of arranging the wire member 37 at the outer side of the flexible printed circuit board 36 is large, as compared with that of the wire member 37 in the case of arranging the wire member 37 at the inner side of the flexible printed circuit board 36. Thus, a space for arranging the wire member 37, the inclination of which is large, should be assured. Accordingly, the thickness of the main body portion 1 is increased. Therefore, in the case of considering only the lifetime characteristic, the wire member 37 can be placed either at the outer side or at the inner side of the flexible printed circuit board 36. Additionally, in the case of reducing the thickness of the main body portion 1, it is more advantageous to place the wire member 37 at the inner side of the flexible printed circuit board 36.

Furthermore, in the case of using a plurality of wire members, the wire members are provided in parallel to one another so that the centers of the circular arcs formed in all the wire members can be located substantially at the same position. Consequently, the lifetime characteristic can be prevented from being extremely degraded. That is, in a case where all circular arcs of the wire members are concentrically formed in the state illustrated in FIG 8(a), the curvature of each of the circular arcs can be sufficiently large, as compared in the case of forming the circular arcs in the direction of thickness of the main body portion1. Thus, the thickness of the main body portion 1 and stress generated therein can be prevented from being increased.

Further, in the case of arranging the radio circuit portion 13, the matching circuit portion 14, and the antenna by separating one of the two casings, in which the radio circuit portion 13 and the matching circuit portion 14 are placed, from the other casing in which the antenna is provided. In a case where an external interface connector is provided in the lower casing 3 in the first embodiment and where this connector is connected to the connectors radio circuit portion, the wire member can be used as a signal transmitting/receiving line for transmitting and receiving radio signals between the two casings so as to prevent the gain of the antenna from being reduced.

Incidentally, the leading ends (cutting surfaces) of the aforementioned siding parts 56A and. 56B are configured to face the inner surfaces of the guide portions 46A and 46B, respectively. When the cutting surfaces are slightly moved in a direction perpendicular to a direction (the direction of arrow A), in which the upper casing 3 moves, with respect to the lower casing 2, the cutting surfaces rub against the inner surfaces of the guide portions. In order to eliminate a small unstable movement due to the slight movement, for example, a first rib and a second rib can be provided on the main surface 3A of the lower casing 3 and the rear surface 2D of the upper casing 2, respectively. Alternatively, similarly to a second embodiment to be described later, bend portions can be respectively formed at both ends of the base portion to perform surface-abutment thereagainst.

Next, the antenna 10 is described with reference to FIG. 9.

As shown in FIG. 9(a), the first printed circuit board 9 accommodated in the upper casing 2 has a first ground pattern 71 which is provided substantially on the entire surface thereof other than the electric power supply portion 20, as indicated by shaded portions, and which is at ground potential of the circuit. Furthermore, the second printed circuit board 28 accommodated in the lower casing 3 has a second ground pattern 72 which is provided substantially on the entire surface thereof, as indicated by shaded portions, and which is at ground potential of the circuit.

The electric power supply portion 20 of the first printed circuit board 9, in which the spring terminal 21 is mounted, is placed in the projection portion 11. The electric power supply portion 20 is connected to the radio circuit portion 13 via the matching circuit portion 14. The radio circuit portion 13 is grounded to the first ground pattern 71 and is connected to the control portion 19. The first ground pattern 71 is not provided in the projection portion 11 and is provided in the superposition portion 12 so as not to overlap with the antenna 10. Further, the slide portion 4 is connected to the first ground pattern 71 of the first printed circuit board 9. Thus, the first ground pattern 71 and the slide portion 4 are electrically integral with each other.

The second printed circuit board 28 is placed at a position at which the distance P1 between the antenna 10 and the second ground pattern 72 is longer than the distance P2 between the antenna 10 and the first ground pattern 71 when the main body portion 1 is in the closed state.

The flexible printed circuit board 36 has signal lines (not shown) for connecting the microphone 22, the operating portion 23, and the second camera portion 27 to the control portion 19 formed on the first printed circuit board 9, and has also a ground line for connecting the second ground pattern 72, which is connected to the negative electrode of the battery 29, to the first ground pattern 71.

However, it is necessary to form both of a group of a large number of signal lines and the ground line on the flexible printed circuit board 36 having a predetermined width. In addition, the thickness of the flexible printed circuit board 36 is small. Therefore, the ground line provided on the flexible printed circuit board 36 is a narrow circuit line, so that only a slight amount of high-frequency electric current is fed in the ground line.

The antenna 10 is incorporated in the projection portion 11 and has a planar element portion 10A which is parallel to a slope portion 11A An end part of the planar element portion 10A is urged by the spring terminal 21. The planar element portion 10A implements a multifrequency antenna having a first resonance frequency f2 and a second resonance frequency f2 via a reactance element portion (not shown). A multifrequency antenna disclosed in JP-A-2004-134975 by the inventor of the present invention is used as the multifrequency antenna according to the present embodiment.

Thus, an end portion of the planar element portion 10A is connected to the electric power supply portion 20 to thereby implement a built-in type monopole antenna.

Incidentally, the frequency f1 ranges from 830 MHz to 960 MHz, The frequency f1 ranges from 1710 MHz to 2170 MHz, The antenna 10 has resonance frequencies in a band including the frequencies f1 and f2, Therefore, the portable terminal according to the present embodiment is suitable for GSM, DCS, PCS, and W-CDMA in Japan and Europe.

Next, an operation of the antenna 10 is described below.

As shown in FIG. 9(b), when the main body portion 1 is in a closed state, high-frequency electric current flows in the direction of arrow J (the direction in which the electric current flows away from the electric power supply portion 20) in the first ground pattern 1. The second ground pattern 72 is connected to the first ground pattern 71 by the flexible printed circuit board 36. However; as described above, the flexible printed circuit board 36 feeds only slight high-frequency electric current. Accordingly, only slight high-frequency electric current flows in the second ground pattern 72 connected thereto.

As shown in FIG. 9(c), when the main body portion 1 is in an opened state, the antenna 10 performs parallel displacement by L4 from the second ground pattern 72 in a direction in which the antenna 10 moves away from the second ground pattern 72.

Incidentally, when the main body portion 1 is in the closed state, the second ground pattern 72 and the antenna 10 are arranged close to each other, When the main body portion 1 in the opened state, the upper casing 2 is moved with respect to the lower casing 3 to make the second ground pattern 72 and the antenna go away from each other, Consequently, conditions for grounding the periphery of the antenna 10 changes depending upon the opened-state/closed-state of the main body portion 1 with the result in reduction in the gain of the antenna 10. Therefore, the control portion 19 should detect the opened-state/closed-state of the main body portion 1 and change conditions for matching in the matching circuit portion 14 according to a result of the detection. That is the matching circuit portion 14 and control programs therefor are complicated..

Thus, according to the first embodiment, the aforementioned relationship between the distance P1 and the distance P2 is established so as to minimize the influence of the second ground pattern 72 upon the antenna 10 even when the mode of the main body portion 1 is changed. Thus, the gain of the antenna 10 is prevented from being reduced due to the second ground pattern 72. Consequently, the matching circuit portion and the programs can be simplified.

Accordingly, in any of the opened state and the closed state of the main body portion 1, the high-frequency electric current flowing in the first ground pattern 7 is dominant.

Next the distribution of electric current in the first ground pattern 71 and that of electric current in the second ground pattern 72 are described below with reference to FIGS. 10 through 12. FIGS. 10 through 12 illustrate results of simulation.

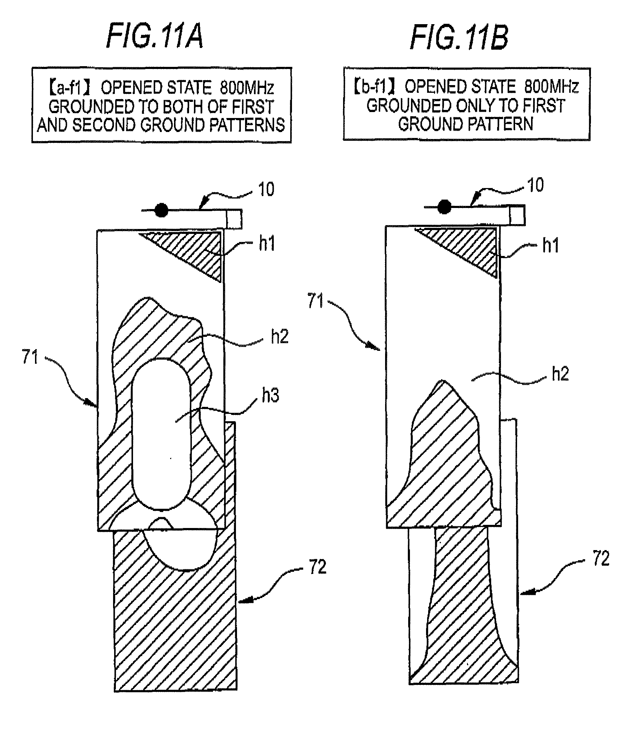

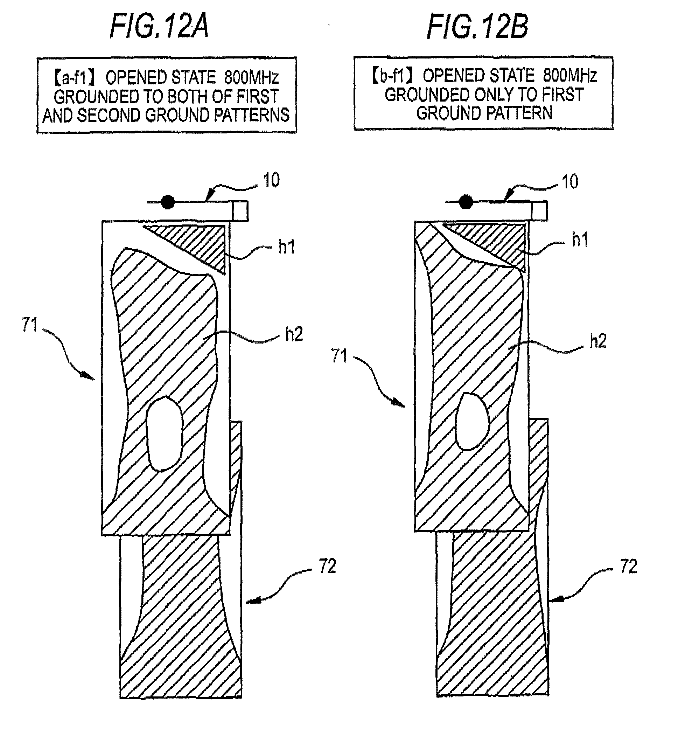

Conditions for simulation are as follows. That is, the length in the transversal direction of the first ground pattern is set at 40 mm, while the length in the longitudinal direction of the first ground pattern is set at 90 mm. The length in the transversal direction of the second ground pattern is set at 40 mm, while the length in the longitudinal direction of the second ground pattern is set at 70 mm. The amount L4 of sliding of the upper casing 2 with respect to the lower casing 3 is set at 50 mm. For confirming advantages of the first embodiment, the slide portion 4 of the present embodiment is compared with that of a structure in which the slide portion 4 is grounded also to the second grounded pattern 72.
(a-f1) This is a case where the slide portion 4 is grounded to both the first ground pattern 71 and the second ground pattern 72 when the main body portion 1 is in the closed state at a frequency of 800 MHz (see FIG. 10(a)).
(b-f1). This is a case where the slide portion 4 is grounded only to the first ground pattern 71 when the main body portion 1 is in the closed state at a frequency of 800 MHz in the configuration of the first embodiment (see FIG. 10(b)).
(a-f2) This is a case where the slide portion 4 is grounded to both the first ground pattern 71 and the second ground pattern 72 when the main body portion 1 is in the closed state at a frequency of 2000 MHz (see FIG 10(c)).
(b-f2) This is a case where the slide portion 4 is grounded only to the first ground pattern 71 when the main body portion 1 is in the closed state at a frequency of 2000 MHz in the configuration of the first embodiment (see FIG. 10(d)).
(c-f1) This is a case where the slide portion 4 is grounded to both the first ground pattern 71 and the second ground pattern 72 when the main body portion 1 is in the opened state at a frequency of 800 MHz (see FIG. 11 (a)).
(d-f1) This is a case where the slide portion 4 is grounded only to the first ground pattern 71 when the main body portion 1 is in the opened state at a frequency of 800 MHz in the configuration of the first embodiment (see FIG. 11(b)).
(c-f2) This is a case where the slide portion 4 is grounded.to both the first ground pattern 71 and the second ground pattern 72 when the main body portion 1 is in the opened state at a frequency of 2000 MHz (2 GHz) (see FIG. 12(a)).
(d-f2) This is a case where the slide portion 4 is grounded only to the first ground pattern 71 when the main body portion 1 is in the opened state at a frequency of 2000 MHz (2 GHz) in the configuration of the first embodiment (see FIG. 12(b)).

FIG. 13(a) illustrates, a case where the main body portion 1 is in the closed state, and where the slide portion is grounded to both the first ground pattern and the second ground pattern.

FIG. 13(b) illustrates a case where the main body portion 1 is in the opened state, and where the slide portion 4 is grounded only to the first ground pattern.

FIG. 13(c) illustrates a case where the main body portion 1 is in the closed states and where the slide portion is grounded to both the first ground pattern and the second ground pattern.

FIG. 13(d) illustrates a case where the main body portion 1 is in the opened state, and where the slide portion 4 is grounded only to the first ground pattern.

TABLE 1 summarizes results of comparisons among cases illustrated in views included in FIG. 13. As is understood from FIG, 13, little electric current flows in the second ground pattern 72. Thus, substantially no change occurs in the second ground pattern 72. Therefore, the description of the second ground pattern 72 is omitted,

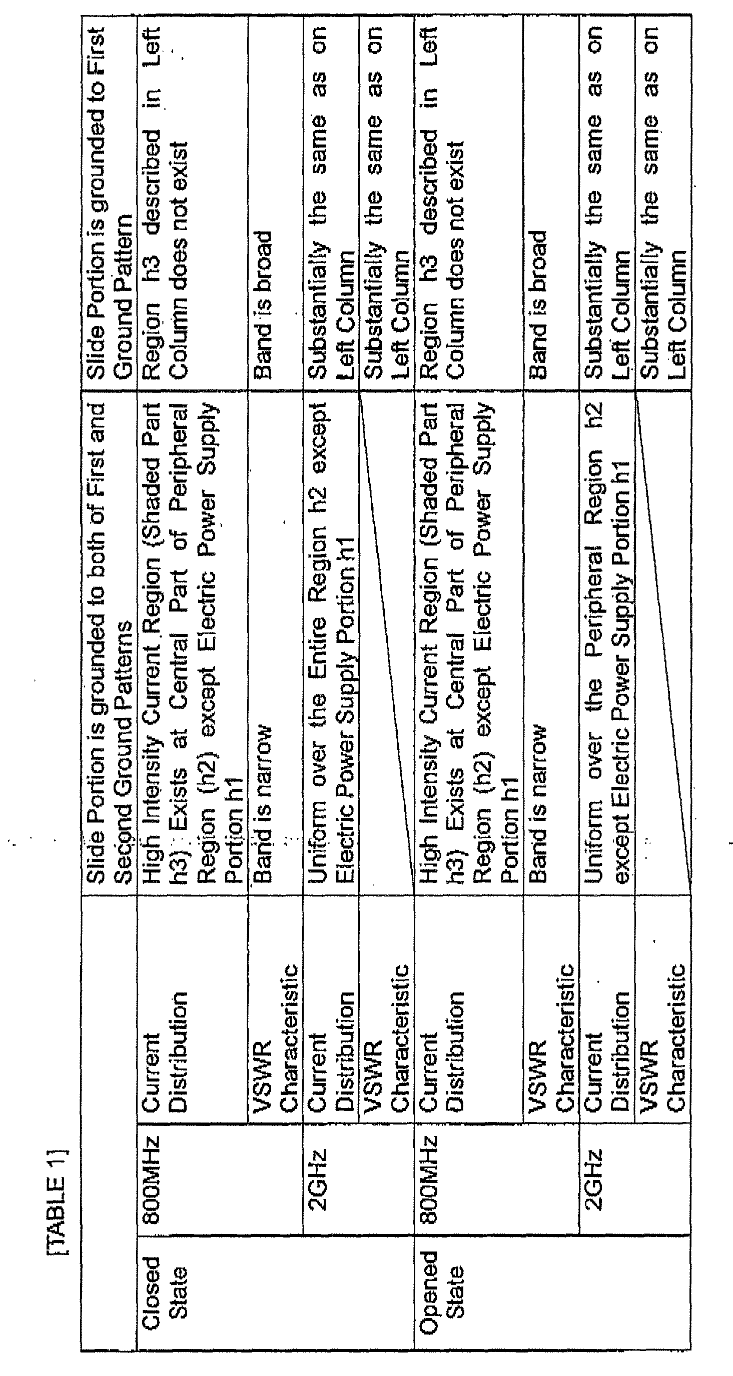

According to TABLE 1, the distribution of electric current is described below. At the frequency of 800 MHz, a high-current-density region (h3) is present in the vicinity of the center of the first ground pattern 71. The reason is that when the first ground pattern 71 and the second ground pattern 72 are electrically connected (strongly-coupled) to each other, high-frequency electric current flows in the second ground pattern 72 whose electric potential is low, and that electric current is concentrated on a ground connecting point portion of the first ground pattern 71.

During talking over the portable telephone, a user's cheek is likely to touch the high-current-density region (h3). Thus, the high-current-density region (h3) is likely to be affected by a human body. Incidentally, at the frequency of 2 GHZ, there is little change in the distribution of electric current, in any of the opened state and the closed state of the main body portion 1. Thus, the distribution of electric current is substantially unaffected by the state of the casings.

Hereinafter, VSWR characteristic obtained by the simulation is described. At the frequency of 800 Hz, in any of the opened state and the closed state of the main body portion 1, the band of the frequency f1 in the case of grounding the slide portion only to the first ground pattern 71 is wider than that of the frequency f1 in the case of grounding the slide portion to both the first ground pattern 71 and the second ground pattern 72.

The reason is that a total electrical length is a sum of the electrical length of the first ground pattern 71 and that of the second ground pattern 72 in a case where the first ground pattern 71 and the second ground pattern 72 are electrically connected (strongly-couple) to each other via the slide portion 4.

Thus, the phase of electric current is inverted at an end portion of the first ground pattern 71. High-frequency electric current of the reversed phase is generated in the second ground pattern 72. The reversed-phase high-frequency electric current cancels the high-frequency electric current generated in the first ground pattern 71. Consequently, the band of the frequency f1 is narrow.

At the frequency of 2 GHz, in any of the opened state and the closed state of the main body portion 1, the wavelength is short. Thus, the high-frequency electric current is concentrated on the first ground pattern 71. consequently, the distribution of electric current is difficult to be affected by the second ground pattern. Accordingly substantially no difference is generated.

According to the aforementioned distribution of electric current and to the aforementioned VSWR characteristic, it is understood that in the case of loosely coupling the first ground pattern 71 and the second ground pattern 72, the gain of the antenna can be increased, for example, the band of the frequency f1 can be wider and the influence of a human body can be eliminated as much as possible.

Hereinafter, the antenna 10 is summarized. The antenna 10 is placed at the projection portion 11. The slide portion 4 is grounded to the first ground pattern 71. The first ground pattern 71 and the second ground pattern 72 are loosely coupled to each other. Thus, high-frequency electric current flowing through the second ground pattern 72 can be reduced. Consequently, even in a case where the lower casing 3 is grasped to operate the operating portion 23, the degradation of the performance of the antenna can be suppressed.

Further, when a receiver 5 is put to a user's head so as to talk over the portable telephone in a case where a high-current-density region is present in the first ground pattern 71, this region touches the user's cheek. Thus, the first ground pattern 71 is likely to be affected by a human body, Consequently, the terminal according to the first embodiment which includes no high-current-density region as found in the vicinity of the center of the first ground pattern, is preferable for preventing the performance of the antenna from being degraded,

Therefore, in a case where the slide portion 4 is grounded to the upper casing 2, high performance of the antenna is obtained in any of the opened state and the closed state of the main body portion 1, In the first embodiment, the amount of sliding L4 is set at 50 mm, However, it is apparent that this amount of sliding does not affect the performance of the antenna even when the amount of sliding is further increased or decreased.

Although the first embodiment has been described as a structure in which a monopole antenna is implemented, it is effective to ground the slide portion 4 to the first ground pattern 71 even in a case where the relocation of the antenna 10 to the lower casing 3, or the arrangement of a second antenna 10 at the lower casing 3 is used as means for implementing an antenna of the type other than the monopole antenna.

In a case where an antenna is provided in the lower casing 3, when the first ground pattern and the second ground pattern are strongly-strongly coupled to each other, the electrical length of the main body portion 1 changes depending upon which of the opened state and the closed state the state of the main body portion 1 is. Further, even in a case where the slide portion is grounded to the lower casing having an antenna, he electrical length of the main body portion 1 changes depending upon which of the opened state and the closed state the state of the main body portion 1 is. Thus, the performance of the antenna is degraded. On the other hand, it is useful for preventing the electrification of the slide portion 4 to ground the slide portion to one of the casings.

Additionally, the type of the antenna according to the present invention is not limited to a monopole antenna. Even in a case where the antenna according to the first embodiment is replaced with an inverted-F antenna or an inverted-L antenna, a structure insusceptible to the influence of the second ground pattern 72 can be implemented, as long as the structure is configured so that the slide portion 4 is grounded to the first ground pattern 71 of the upper casing 2.

Accordingly, even in a case where an antenna is placed in one or both of the upper casing 2 and the lower casing 3, even when the mode of the main body portion 1 is changed, the terminal can be adapted to be less subject to the influence of the ground pattern by grounding the slide portion 4 to the first round pattern 71 in the aforementioned configuration and by loosely coupling the first ground pattern 71 and the second ground pattern 72 to each other. Thus, the terminal according to the present embodiment is suitable for use in a sliding type portable terminal having an antenna. Incidentally, the aforementioned "loosely-coupled" state is a state in which an LC trap circuit is loaded between the first ground pattern 71 and the second ground pattern 72, and in which the first ground pattern 71 and the second ground pattern 72 are coupled with each other in direct current and have high impedance in high frequency.

The aforementioned first embodiment is summarized below.

First in a case where the slide portion is attached to the upper case from the inner surface side of the upper casing, the guide portion is permitted to pass therethrough. However, the guide-rail portion is not allowed to pass therethrough. Consequently, the guide-rail portion can be attached to the upper casing without using screws.

Incidentally, the unfolded extension portion is formed at a part of the support portion for the guide-rail portion so as to prevent the guide-rail portion from passing therethrough. The extension portion is made to abut against the periphery of the attachment-opening portion. Alternatively, an additional component can be fixed to the support portion by being overlapped therewith to thereby prevent the additional component from passing therethrough. Additionally, the shape of the extension portion is not limited to the aforementioned shape.

Second, the guide-rail portion is exposed to the inner surface of the upper casing. Thus, the guide-rail portion can be easily and electrically connected to the first printed circuit board that faces the guide rail portion

Third, the antenna is placed at the top end of the upper casing to be spaced from the main surface thereof. Thus, when a user uses the portable telephone by putting the receiver to the user's head portion, the antenna is spaced away from the user's head portion. When a user inputs characters while observing the display portion, the user holds the operating portion by hand, Thus, the antenna and the first printed circuit board are not covered with the user's hand. Consequently, the antenna is provided at a place at which the influence of a human body is eliminated as much as possible. At that time, the metallic slide portion is grounded to the first ground pattern. Thus, the influence of the second printed circuit board is reduced as much as possible. Consequently, a high gain monopole antenna is implemented. lncidantally, similar advantages can be obtained by implementing the antenna by an inverted-F antenna or an inverted-L antenna.

Fourth, the wire member is placed so as to form a U-shaped bend when the upper casing and the second casing are seen so as to overlap with each other. Thus, stress generated in the wire member is reduced. Consequently, even in the case of the sliding type portable telephone which iteratively causes the casing to slide, the structure, in which the wire member is difficult to break, is implemented.

Fifth, the aforementioned wire member is placed at the inner side of the bend formed by the flexible printed circuit board. Thus, a structure, in which both the wire member and the flexible printed circuit board coexist are difficult to break, is implemented.

Incidentally, the slide portion is grounded to the first ground pattern of the first printed -circuit board. However, in a case where the structure is configured so that the first printed circuit board is unnecessary, the slide portion can be grounded to the display wiring member 6A to be connected to the display portion 6A.

### (Second Embodiment)

A second embodiment of the present invention is described below with reference to the accompanying drawings. In the present embodiment, a slide portion is a modification of the slide portion of the sliding type portable telephone that has been described in the first embodiment. The description of components of the second embodiment, which are the same as those in the electrical configuration provided in the casings of the portable telephone of the first embodiment and are designated with the same reference numerals as those designating the same components of the first embodiment, is omitted.

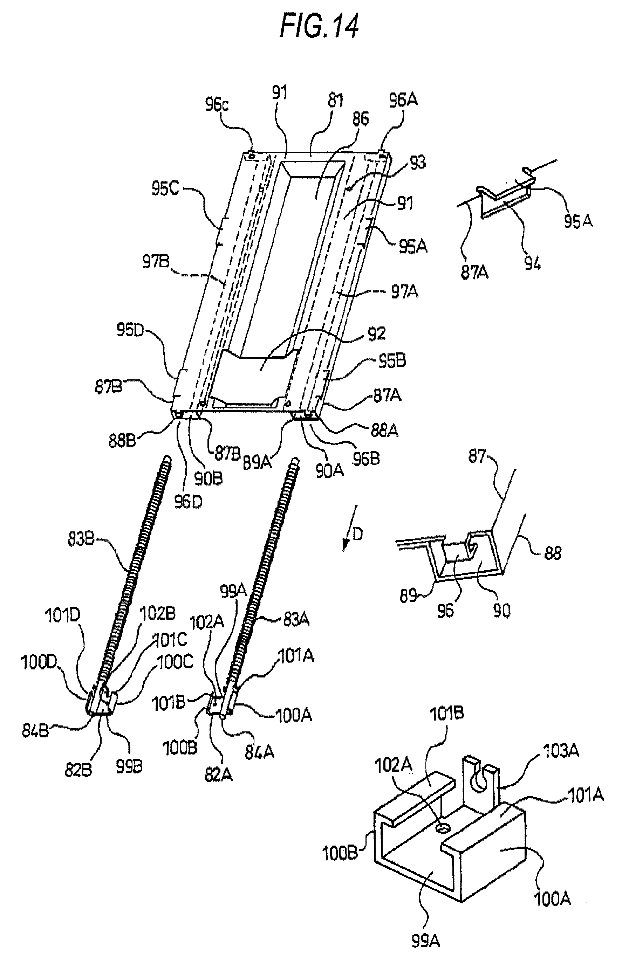

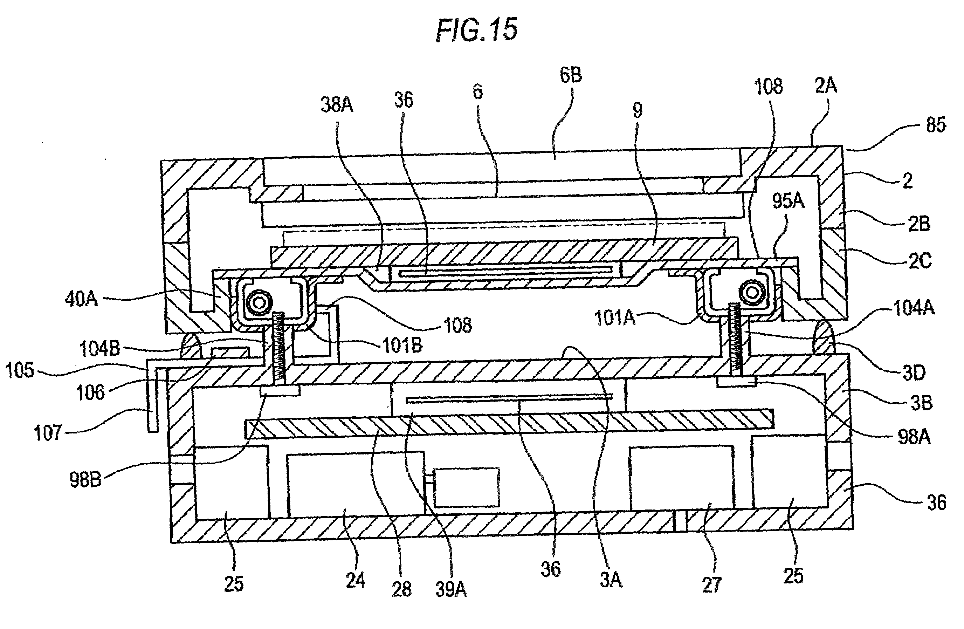

FIG. 14 is an exploded perspective view illustrating a slide portion according to the second embodiment of the present invention FIG. 15 is a transversally cross-sectional view illustrating a sliding type portable telephone using the slide portion according to the second embodiment of the present invention.

A slide portion 80 slidably fixes the upper casing 2 and the lower casing 3, which have been described in the foregoing description of the first embodiment, and includes mainly a guide-rail portion 81, base portions 82A and 82B, compression springs 83A and 83B, and pipes 84A and 84B. Each of the guide-rail portion 81, and the base portions 82A and 82B is formed of a metal thin film. The base portions 82A and 82B to be fixed to the lower casing 3 are slidable with respect to the guide-rail portion 81 to be fixed to the upper casing 2 in order to change the state of the main body portion 85 from the closed state to the opened state.

The guide-rail portion 81 has a concave portion 86, and includes two guide portions 90A and 90B, each of which is provided at both ends thereof and includes non-cutting surfaces of corresponding ones of the fourth corner portions 87A, 87B, the fifth corner portions 88A, 88B, and the sixth corner portions 89A, 89B and is shaped like a box. The guide-rail portion 81 includes also a support portion 91 for integrally supporting the guide portions 90A and 90B. The concave portion 86 is provided with a third slit 92 through which the flexible wiring member passes. A leading end portion provided at a more leading end side than each of the sixth corner portions 89A and 89B overlaps with the support portion 91 and is closely attached and fixed to the support portion 91 by corresponding-ones of four caulking portions 93.

The concave portion 86 produces a space between the first printed circuit board 9 and the support portion 91 when the support portion 91 is placed to abut against the first printed circuit board 9. Thus, devices can be mounted on the first printed circuit board 9. For examples the connectors 38A and 38B are mounted thereon.

Cutout portions 94 are provided at four corners of the support portion 91. When the fourth corner portions 87A and 87B are formed, unfoldable extension portions 95A, 95B, 95C, and 95D are formed respectively corresponding to the fourth corner portions by extending the support portion 91.

Claw portions 96A, 96B, 96C, and 96D are formed at end portions in the longitudinal direction of the guide portions 90A and 90B so that the claw portions 96A and 96B are folded to face each other and that the claw portions 96C and 96D are folded to face each other.

Elongated holes 97A and 97B (indicated by dashed lines in FIG. 14) are formed in the guide portions 90A and 90B, respectively. Screws 98A and 98B respectively fixed to the base portions 82A and 828 to be inserted into the guide portions 90A and 90B are inserted into the elongated holes 97A and 97B.

Each of the base portions 82A and 82B has an associated one of flat central portions 99A and 99B, associated two of side surfaces 100A, 100B, 100C, and 100D formed by erecting both ends of each of the central portions 99A and 99B. Further, leading end surfaces (cutting surfaces) of the base portions 82A and 82B are folded to face each other so as to form top surfaces 101A, 101B, 101C, and 101 D parallel to the central portions 99A and 99B. Although the sliding parts 56A, and 56B are formed in the first embodiment by folding, sliding parts are formed by the central portions 99A, 99B, the two side surfaces 100A, 100B, 100C, and 100D, and the top surfaces 101A, 101B, 101C, and 101D in the second embodiment.

Fifth through holes 102A, 102B are formed in the central portions 99A and 99B, respectively, Screws 98A and 988 are screwed into the fifth through holes 102A and 102B, respectively. The central portions 99A and 99B have receptacle portions 103A and 103B, respectively. Each of the receptacle portions 103A and 103B supports an associated one of the pipes 84A and 84B. An end surface of each of the compression springs 83A and 83B abuts against an associated one of the receptacle portions 103A and 103B which are respectively subjected to urging forces applied from the compression springs 83A and 83B.

The hollow pipes 84A and 84B are inserted into the coil portions of the compression springs 83A and 83B, respectively. Then, the pipes 84A and 84B are passed through and supported by the receptacle portions 103A and 103B, respectively Each of the pipes 84A and 84B is accommodated in an associated one of the guide portions 90A and 90B together with an associated one of the compression springs 83A and 83B. In both end portions of each of the guide portions 90A and 90B, associated two of the claw portions 96A, 96B, 96C, and 96D are inserted and held. The compression springs 83A and 83B are prevented by these pipes from meandering when compressed. These pipes maintain a spring constant at a constant value. Further, these pipes have also the function of preventing the compression springs 83A and 83B from being ejected from the elongated holes 97A and 97B, respectively.

The base portions 82A, 82B, the compression springs 83A, 838, and the pipes 84A, 84B, which are formed in this manner, are inserted into the guide potions 90A and 90B, respectively. Each of the base portions 82A and 82B is subjected to the urging force from an associated one of the compression springs 83A and 838, and is urged in the direction of arrow D. However, the base portions 82A and 82B are disabled by the claw portions 96B 96D at the side of arrow D to eject from the elongated holes 97A and 97B, respectively The central parts 99A, 99B of the base portions 82A, 82b, the side surfaces 100A, 100B, 100C, and 100D, the top surfaces 101A, 101 B, 101C, and 101D slidably surface-abut against the inner surfaces of the guide portions 90A and 90B, respectively. That is, both the guide portions 90A and 90B are configured to slide while the non-cutting surfaces rub against the inner surfaces of the guide portions. Consequently, a frictional resistance is reduced. Incidentally, the base portions can be..constituted by products having no cutting surfaces 82A and 82B and can be made to surface-abut against the guide portions. The second embodiment and the first embodiment are constituted using low-priced plate materials,

The lower cover 3B includes stationary portions 104A and 1048, to each of which an associated one of the base portions 82A and 82B is fixed, and a holding portion 106 which slidably holds a lever 105 and is provided in the vicinity of the one 104B of the stationary portions. The lever 106 has a projecting piece portion 107, which is provided at one end thereof and is protruded to the left side surface of the lower casing 3, and has also a catching claw 108 caught on the side surface 100C of one 90B of the guide portions. The stationary portions 104A and 104B are hollow bosses erected on the main surface 3A, through which the screws 98A and 98B are respectively inserted.

Next, a method of assembling the main body portion 85 is described below. Incidentally, the slide portion according to the second embodiment is used to replace the slide portion of the first embodiment therewith.

When the slide portion 80 is assembled to the attachment-opening portion 40 formed in the upper case 2C, the two guide portions 90A and 90B pass through the attachment-opening 40. The extension portions 95A, 958, 95C, and 95D are mounted on the positioning portion 40A on the reinforcing rib 40B around the attachment-opening portion 40 to thereby the positioning thereof. Thus, similarly to the first embodiment, the extension portions 95A, 5B, 95C, and 95D are mounted on the reinforcing rib 40B so that the slide portion 80 cannot pass through the attachment-opening portion 40.

Next, the lower cover 3B, to which the lever 105 is attached, is made to face the upper case 2C. Thus, a space, whose height is equal to that of the projection 3D, is formed by the lower cover 3B and the upper case 2C. In this state, the stationary portions 104A and 104B are made to abut against the central portions 99A and 998 of the base portions 82A and 82B. Then, the screws 98A and 98B are screwed into the through holes 102A and 102B, respectively. Thus, the base portions 82A and 82B are fixed to the lower cover 3B. Even when a user tries to remove the upper case 2C from the lower cover 3B, the upper case 2C cannot be removed from the lower cover 3B, because of the facts that the base portions 82A and 82B are fixed thereto, and that the guide-rail portion 81 cannot pass through the attachment-opening portion 40. Additionally, even when a user tries to attach the upper case 20 closer to the lower cover 3B, the upper case 2C cannot be attached close to the lower cover 3B due to the projection 3D.

Accordingly, the space between the lower cover 3B and the upper case is always maintained at a constant amount.

Subsequently, the flexible printed circuit board 36 and the wire member 37 are passed through the third slit 86. Then, the upper cover 2B, and the lower case 3C are assembled, similarly to the first embodiment. Thus, the main body portion 85 is completed.

The support portion 91 of the guide-rail portion 81 is exposed to the first printed circuit board 9, similarly to the first embodiment. Both the support portion 91 and the first printed circuit board 9 can be electrically connected to each other only by causing the exposed surface to abut against the first printed circuit board 9. Incidentally, the distance between the first printed circuit board 9 and the rear surface 2D of the upper casing 2 is determined only depending upon the thickness of the guide portions.

Additionally, as described in the foregoing description of the first embodiment, both the support portion 91 and the first printed circuit board 9 can be connected to each other using a dedicated spring or spring piece instead of the electrically connecting method.

Next, an operation of the second embodiment is described below. When the main body portion 85 is in a closed state, the compression springs 83A and 83B are elongated in a region of the superposition portion 12 of the upper casing 2. In a case where the upper casing 2 is moved with respect to the lower casing 3 by applying a force, which acts in the direction of arrow D, the compression springs 83A and 83B are compresses. After the displacement thereof by a. predetermined length, the catching claw 108 of the lever 105 engages with the side surface 100C. Thus, the compression springs 83A and 83B are restrained from being restored. That is, the main body portion is put into a closed state. When an operation of pushing the projecting piece portion 107 is performed, the catching using the catching claw 108 is canceled. Then, the elongation of the compression springs 83A and 83B is started. The upper casing 2 slides a predetermined distance with respect to the lower casing 3. Subsequently, the base portions 82A and 82B .abut against the claw portions 96B and 96D, respectively. Thus, the main body portion is brought into an opened state.

When the state of the main body portion is changed from the closed state to the opened state, the base portions 82A and 82B slide while rubbing against the inner surfaces of the guide portions 90A and 90B. However, because the non-cutting surfaces abut against each other, sliding friction is low. Thus, a smooth operation is performed. In addition, such components are constituted using low-priced plate materials. Consequently, the cost of the portable terminal can be reduced.

In a case where the portable terminal has a structure in which the cutting surface is made to abut against the inner surfaces of the guide portions 90A and 90B around the elongated holes 97A and 97B, an edge of the cutting surface slides while abutting against the inner surfaces of the guide portions 90A, and 90B. Thus, wear of the edge occurs. Consequently, no stable sliding motion is performed.

Therefore, a structure enabling a stable operation can be implemented by the shape of the second embodiment in which the surfaces are made to abut against each other.

Further, the two guide portions 90A and 90B are integrally coupled to each other Thus, the parallelism (in a moving direction in which the base portion moves) of both the guide portions is assured in a stage in which the guide-rail portion 81 is manufactured. Further, even when the slide portion 80 constituted by the guide-rail portion 81 is assembled to the upper casing 2, the parallelism in a stage, in which the component is manufactured, is continuingly maintained. Thus, an operation of guiding the sliding motion of the lower casing 3 can smoothly be performed. In a case where the guide portions are separate ones, strict dimension accuracy is required by the upper case 3C so that the guide portions are parallel to each other when attached to the upper case 3C. In a case where a sufficient the parallelism thereof is not obtained, for example where the distance therebetween at the side in the moving direction is narrower than that therebetween at the opposite side the following situations may occur. For example, the base portion cannot be guided to the guiding end, because the distance between the stationary portions remains unchanged. Further, in a case where deformation occurs to the extent that the upper case 2C bends, the parallelism varies with products. Moreover, the urging force is changed. Furthermore, the main body portion is not sufficiently opened so as to be put into an opened state. Additionally, the main body portion cannot be put into a closed state.

Incidentally, the present embodiment has been described as an example of using the compression springs. However, extension springs can be used instead of the compression springs. In the case of using extension springs, it is useful to fix one end of each extension spring to a sliding end, and to fix the other end of each extension spring to the base portion. In the case of using the compression spring, a state, in which the compression spring is elongated in the region of the superposition portion 12 of the upper casing 2, is the opened state. However, in the case of using the extension spring, a state, in which the extension spring is elongated in the region of the superposition portion 12 of the upper casing 2, is the closed state. Incidentally, in the case of using the extension spring, the spring is always in an elongated state. The meandering of each spring does not occur. Thus, the pipes are unnecessary The springs can be appropriately selected according to the size of each guide portion and to the thickness of the terminal,

Thus, the second embodiment is summarized below.

The differences between the second embodiment and the first embodiment are as follows. (1) The guide portion of the second embodiment is shaped like a box. (2) The base portions of the second embodiment are separate ones. (3) The urging means of the second embodiment are compression springs. The guide portions, the border between which is an elongated hole, are of the center impeller type that supports both ends of the base portions. Thus, even when a force, which causes the two casings 2 and 3 to be away from each other, is applied thereto, the force is applied to the fifth corner portion and the sixth corner portion. Therefore, the deformation of the guide portion can be minimize. The first embodiment has a structure (what is called a cantilever structure) in which such a force is applied only to the second corner portion. Accordingly, the second embodiment is more effective for the force, which causes the two casings to be away from each other, than the first embodiment. Further, although the base portions of the second embodiment are separate ones, the guide portions are integrally supported by a single support member, so that the parallelism of both the guide portions is assured. Consequently, the guide portions can perform parallel sliding. Accordingly, the second embodiment is not more disadvantageous than the first embodiment.

Therefore, although there are the aforementioned differences between the first and second embodiments described in detail, the advantages, the slide portion of the second embodiment can obtain advantages similar to those summarized in the foregoing description of the first embodiment.

Incidentally, the present invention is not limited to the first and second embodiments, Various modes of the slide portion can be selected and implemented without departing from the spirit and scope of the invention.

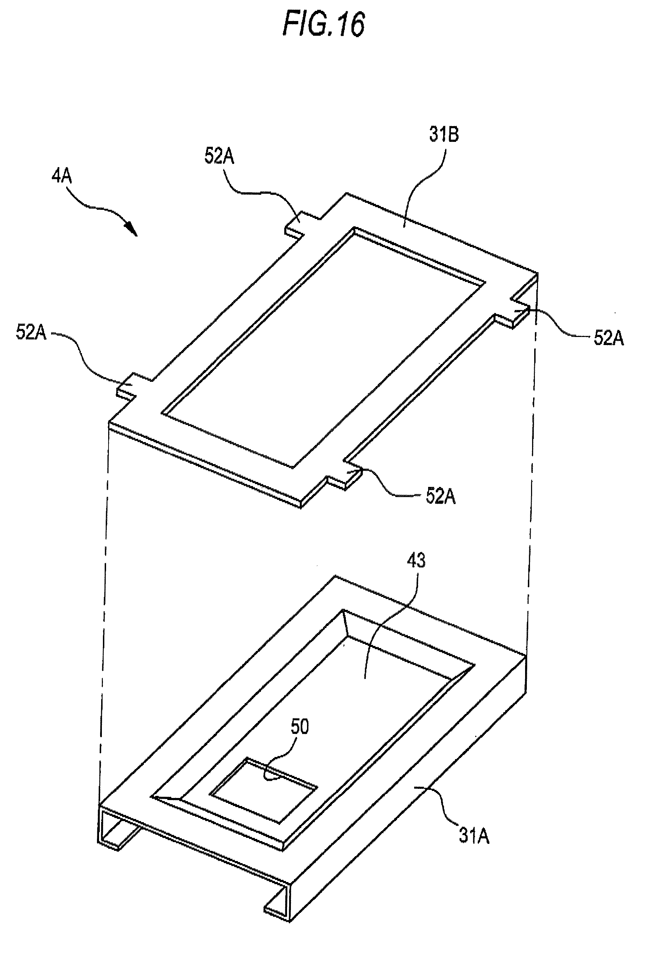

For example, the slide portion 4A illustrated in FIG. 16 is configured such that a frame 31 B, which is a separate member, is attached to the guide-rail portion 31A. The shape in plan view of frame 31B substantially coincides with that in plan view of the guide-rail portion 31. Two extension portions 52A are provided on each long side of the guide-rail portion 31A. Thus a total of 4 extension portions 52A are provided thereon.

According to such a slide portion 4A, the extension portions can be formed without providing cutouts in the guide portion. Thus, infiltration of water from the cutouts can completely be eliminated. Users use the portable telephone of this type by grasping the telephone. Therefore, sometimes, users accidentally drop the portable telephone. Occasionally, the portable telephone is dropped into a puddle. According to the first embodiment, the cutouts are sufficiently reduced in size. In addition, the slide portion is attached closely to the periphery of the attachment-opening to thereby prevent water from easily enters the terminal. Such means are effective as a countermeasure against the submersion of the portable terminal.

lncidentally, the frame 31 B is configured to have a planar shapes larger than the guide-rail portion 31, without providing the extension portion 52A projecting at a specific place thereof. Thus, the entire edge portion of the frame 31B can be used as the extension portion.

That is, the extension portion is provided at an outer side than the guide portion of the guide-rail portion. Thus, the slide portion cannot pass through the attachment-opening of the upper casing. The base portion slidably held by the guide-rail portion is fixed to the lower casing, while a part of the slide portion is exposed to the inner surface side of the upper casing. Consequently, the upper casing and the lower casing can perform a stable sliding operation.

Further, the present invention has been described with reference to the embodiments configured so that a U-shaped guide portion or a box-like guide portion is formed in the guide-rail portion. However the shapes of the guide portions of the base portion and the sliding parts are not limited to the aforementioned shapes, as long as the terminal has a structure in which the base portion is slidably guided by the guide-rail portion by forming the guide portion in the base portion, and forming the sliding part in the guide-rail portion, alternatively, by forming the guide groove in one of the base portion and the guide-rail portion and forming a slide bearing portion in the other of the base portion and the guide-rail portion. A part of the guide-rail portion can be exposed to the inner surface side of the upper casing. Additionally, a sliding member formed of a material having a good sliding characteristic can appropriately be provided on a sliding surface.

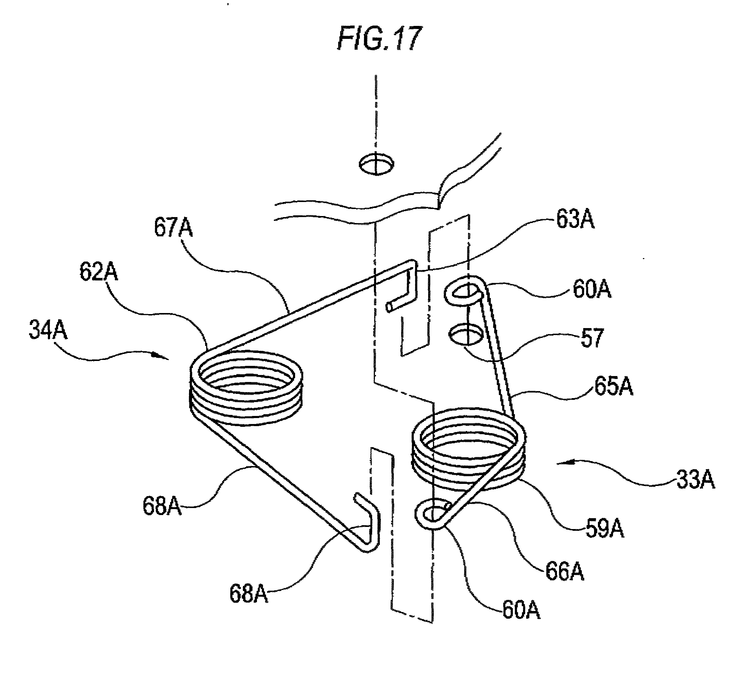

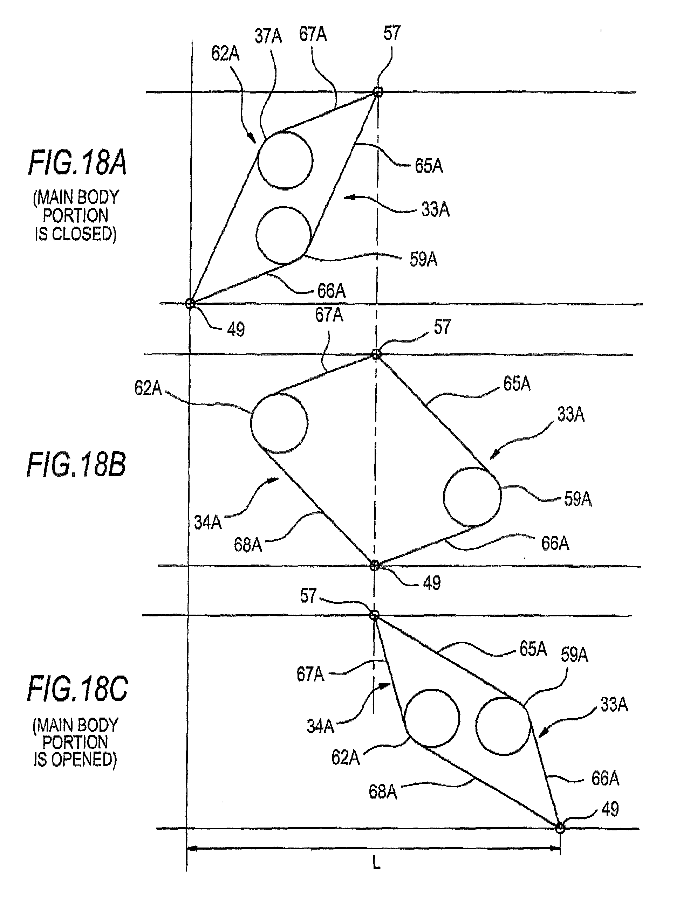

Further, the shapes of the first torsion coil spring and the second torsion coil spring are not limited to those exemplified in the description of the first embodiment. The first torsion coil spring 33A and the second torsion coil spring 34A illustrated in FIGS. 17 and 18 can be employed.

As illustrated in FIG 17, a first torsion coil spring 33A has a first coil portion (coil portion) 59A formed to be wound clockwise, and has also ring portions 60A, 60A formed at both end portions thereof. A second torsion coil spring 34A has a second coil portion (coil portion) 62A formed to be wound counterclockwise, and has also folded portions 63A, 63A formed at both end portions thereof by being folded substantially like a letter "U".

The first torsion coil spring 33A and the second torsion coil spring 34A are attached to the second through hole 49 a follows, similarly to the aforementioned first torsion coil spring 33 and the aforementioned second torsion coil spring 34. That is, the folded portion 63A of the second torsion coil spring 34A is passed through the ring portion 60A of the first torsion coil spring 33A. Subsequently, the folded portion 63A is caught in and connected to the through hole 57 of the base portion 32. A folded portion 64A of the second torsion coil spring 34A is passed through the ring portion 60A of the first torsion coil spring 33A. Then, the folded portion 64A is caught in and attached to the second through hole 49.

Further, a first coil portion 59A of the first torsion coil spring 33A is wound clockwise. A second coil portion 62A of the second torsion coil spring 34A is wound counterclockwise. Thus, similarly to the aforementioned first torsion coil spring 33 and the second torsion coil spring 34, the height of a space (space formed by the central portion 53 and the concave portion 43) for enabling the intervention of the first torsion coil spring 33A and the second torsion coil spring. 34A is suppressed from being increased.

As illustrated in FIG. 18(a), both the first torsion coil spring 33A and the second torsion coil spring 34A are turnable around the central axis of the through hole 57.

Further, when the first torsion coil spring 33A and the second torsion coil spring 34A turn around the central axis of the through hole 57 as the state of the main body portion is changed from a closed state to an opened state, the first torsion coil spring 33A turns clockwise, as viewed in FIG. 18(b). The second torsion coil spring 34A temporarily turns clockwise, as viewed in FIG. 18(b).

That is, the second torsion coil spring 34A moves away from the first torsion coil spring 33A.

Subsequently, the second torsion coil spring 34A turns clockwise, as viewed in FIG. 18(c), and follows the first screw coil spring 33A so as to proceed to a position at which the first torsion coil spring has been present.

That is, the first torsion coil spring 33A turns by setting the dimension between the ring portions 60A, 60A as a radius of turn. Also, the second torsion coil spring 34A turns by setting the dimension between the folded portions 63A and 64A as a radius of turn. Thus, the slide stroke of the main body portion can be set to be large, as compared with the first torsion coil spring and the second torsion coil spring.

### <Industrial Applicability>

The sliding type portable terminal of the present invention is configured to have the spring which gives an urging force to the slide portion. In a case where the guide-rail portion constituting the slide portion is attached to the upper case, the guide-rail is configured as not to pass therethrough. Thus, fastening screws are unnecessary, Further, the slide portion can be grounded with a simple structure. Thus, in a case where an antenna is placed at the top portion of the upper casing, a high-gain antenna can be implemented. Moreover, the present invention has an advantage that increase in the size and the cost of the device can be avoided. For example, the lifetime characteristic of the flexible wiring member can be improved. The present invention is preferably applied to sliding devices for use in slidable compact electronic devices, such as portable telephones, PDAs, mobile type PCs, and lightweight notebook-sized PCs.

## Claims

1. A sliding type portable terminal, comprising:
a first casing, a second casing, and a slide portion configured to connect said first casing and said second casing to each other so that said first casing and said second casing performs relative sliding while facing each other,
wherein said first casing has an opening portion in an opposed surface to said second casing;
said second casing has a stationary portion provided on an opposed surface to said first casing;
said slide portion includes a base portion, a guide-rail portion, and an urging portion;
said base portion is fixed to said stationary portion;
said guide-rail portion has a guide portion configured to guide said base portion so that said base portion is slidable thereon, and has also an extension portion formed by extending said guide-rail portion so as to be protruded outwardly from said guide portion;
said urging portion is provided so as to urge said base portion to a sliding end of said guide portion; and
said slide portion is attached in said opening portion so as to be directed from an inner surface side of said first casing to an outer surface side of said first casing, and allows said base portion and said urging portion to pass therethrough, and causes said extension portion to abut against a periphery of said opening portion and to be caught by said periphery thereof.

2. The sliding type portable terminal according to claim 1, further comprising a first printed circuit board that is accommodated in said first casing and has a first ground pattern, and
wherein an exposure surface of said slide portion, which is exposed to an inner side of said first casing, is electrically connected to said first ground pattern to ground said slide portion.

3. The sliding type portable terminal according to claim 1, further comprising an antenna accommodated in said first casing;
wherein said first casing has a projection portion at an end in a direction of movement of said first casing when said first casing is opened with respect to said second casing; and
said antenna is placed in said projection portion.

4. The sliding type portable terminal according to claim 1, further comprising a wire member placed between said first casing and said second casing,
wherein both ends of said wire member are spaced from each other in a direction perpendicular to a direction of movement of said first casing with respect to said second casing so as to form a U-shaped bend portion in a state in which said first casing and said second casing are seen to overlap with each other.

5. The sliding type portable terminal according to claim 4, further comprising a flexible printed circuit board placed between said first casing and said second casing by being folded over itself, and
wherein said wire member is provided on an inner side of said folded flexible printed circuit board.

## Amended claims

### Amended claims under Art. 19.1 PCT

**1.** A sliding type portable terminal, comprising:
a first casing, a second casing, and a slide portion configured to connect said first casing and said second casing to each other so that said first casing and said second casing performs relative sliding while facing each other,
wherein said first casing has an opening portion in an opposed surface to said second casing;
said second casing has a stationary portion provided on an opposed surface to said first casing;
said slide portion includes a base portion, a guide-rail portion, and an urging portion;
said base portion is fixed to said stationary portion;
said guide-rail portion has a guide portion configured to guide said base portion so that said base portion is slidable thereon, and has also an extension portion formed by extending said guide-rail portion so as to be protruded outwardly from said guide portion;
said urging portion is provided so as to urge said base portion to a sliding end of said guide portion; and
said slide portion is attached in said opening portion so as to be directed from an inner surface side of said first casing to an outer surface side of said first casing, and allows said base portion and said urging portion to pass therethrough, and causes said extension portion to abut against a periphery of said opening portion and to be caught by said periphery thereof.

**2.** The sliding type portable terminal according to claim 1, further comprising a first printed circuit board that is accommodated in said first casing and has a first ground pattern, and
wherein an exposure surface of said slide portion, which is exposed to an inner side of said first casing, is electrically connected to said first ground pattern to ground said slide portion.

**3.** The sliding type portable terminal according to claim 1, further comprising an antenna accommodated in said first casing;
wherein said first casing has a projection portion at an end in a direction of movement of said first casing when said first casing is opened with respect to said second casing; and
said antenna is placed in said projection portion.

**4.** The sliding type portable terminal according to claim 1, further comprising a wire member placed between said first casing and said second casing,
wherein both ends of said wire member are spaced from each other in a direction perpendicular to a direction of movement of said first casing with respect to said second casing so as to form a U-shaped bend portion in a state in which said first casing and said second casing are seen to overlap with each other.

**5.** The sliding type portable terminal according to claim 4, further comprising a flexible printed circuit board placed between said first casing and said second casing by being folded over itself, and
wherein said wire member is provided on an inner side of said folded flexible printed circuit board.

**6.** (Added) A sliding type portable terminal, comprising:
a first casing accommodating a display portion, an antenna and a first printed circuit board having a first grand pattern that is connected to the antenna;
a second casing accommodating a operating portion, a second printed circuit board having a second ground pattern;
a slide portion, a part of the slide portion in which the first casing and the second casing are relatively slidably connected while facing being formed of a metal material;
wherein the antenna overlaps with the first grand pattern, does not overlap with the second grand pattern, and when the first casing is slid to the second casing in a predetermined direction from a closed state in which the operating part is covered to an opening state in which the operating part is exposed, the antenna is provided on an end side in the predetermined direction of the first casing; and
the part of the slide part is grounded to the first ground pattern.

**7.** (Added) A sliding type portable terminal, comprising:
a first casing accommodating a display portion, and a first printed circuit board;
a second casing accommodating a operating portion, a second printed circuit board;
a slide portion in which the first casing and the second casing are relatively slidably connected while facing;
a wire member which electrically connects the first printed circuit board and the second printed circuit board and which is provided between the first casing and the second casing;
wherein both ends of said wire member are spaced from each other in a direction perpendicular to a direction of movement of said first casing with respect to said second casing so as to form a U-shaped bend portion in a state in which said first casing and said second casing are seen to overlap with each other.
